(19) Europäisches Patentamt
European Patent Office
Office européen des brevets

(11) **EP 3 117 194 B1**

(12) **EUROPÄISCHE PATENTSCHRIFT**

(45) Veröffentlichungstag und Bekanntmachung des Hinweises auf die Patenterteilung:
**18.04.2018 Patentblatt 2018/16**

(21) Anmeldenummer: **15706221.7**

(22) Anmeldetag: **23.02.2015**

(51) Int Cl.:
**G01K 7/42** $^{(2006.01)}$     **G01K 13/02** $^{(2006.01)}$

(86) Internationale Anmeldenummer:
**PCT/EP2015/053678**

(87) Internationale Veröffentlichungsnummer:
**WO 2015/135739 (17.09.2015 Gazette 2015/37)**

(54) **WANDLERVORRICHTUNG SOWIE DAMIT GEBILDETES MESSSYSTEM**

TRANSFORMER DEVICE AND MEASUREMENT SYSTEM FORMED THEREWITH

DISPOSITIF CONVERTISSEUR ET SYSTÈME DE MESURE FORMÉ AVEC CE DERNIER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.03.2014 DE 102014103430**

(43) Veröffentlichungstag der Anmeldung:
**18.01.2017 Patentblatt 2017/03**

(73) Patentinhaber: **Endress+Hauser Flowtec AG**
**4153 Reinach (BL) (CH)**

(72) Erfinder:
• **RIEDER, Alfred**
**84032 Landshut (DE)**
• **ZHU, Hao**
**85354 Freising (DE)**
• **WIESMANN, Michael**
**85356 Freising (DE)**

(74) Vertreter: **Andres, Angelika Maria**
**Endress+Hauser (Deutschland) AG+Co. KG**
**PatServe**
**Colmarer Strasse 6**
**79576 Weil am Rhein (DE)**

(56) Entgegenhaltungen:
**EP-A1- 1 014 061**     **EP-A2- 2 151 673**
**US-A1- 2012 109 571**     **US-A1- 2013 085 708**

**Beschreibung**

Die Erfindung betrifft eine Wandlervorrichtung, die geeignet ist, eine der Wandlervorrichtung innewohnenden, gleichwohl zeitlich veränderlichen Ziel-Temperatur, insb. einer Temperatur eines in einem Lumen eines Rohrs geführten Fluids und/oder einer Temperatur einer von nämlichem Fluid kontaktierten Wandung eines solchen Rohrs, zu messen. Ferner betrifft die Erfindung auch ein mittels einer solchen Wandlervorrichtung gebildetes Meßsystem.

Wandlervorrichtungen der in Rede stehenden Art umfassen jeweils ein eine von einer - typischerweise metallischen - Wandung umhüllte Kavität aufweisendes Wandler-Gehäuse sowie ein ein von einer - typischerweise ebenfalls metallischen - Wandung umhülltes Lumen aufweisendes Rohr, das innerhalb nämlicher Kavität des Wandler-Gehäuses angeordnet ist, derart, daß zwischen einer der Kavität zugewandte Innenfläche der Wandung des Wandler-Gehäuses und einer Mantelfläche der Wandung des Rohrs, nämlich einer der Kavität zugewandten Außenfläche der Wandung des Rohrs ein - zumeist mit Luft oder einem inertem Gas befüllter - Zwischenraum gebildet ist. Das wenigstens eine Rohr ist im besonderen dafür eingerichtet, in seinem Lumen ein jeweils zumindest zeitweise strömendes Fluid, beispielsweise ein Gas, eine Flüssigkeit oder eine fließfähige Dispersion, zu führen, derart, daß eine nämlichem Lumen zugewandte Innenfläche der Wandung des Rohrs von im Lumen geführtem Fluid unter Bildung einer ersten Grenzfläche erster Art, nämliche einer Grenzfläche zwischen einer fluiden und einer festen Phase, kontaktiert ist.

Zum Messen einer Ziel-Temperatur, nämlich einer der jeweiligen Wandlervorrichtung innewohnenden, gleichwohl zeitlich veränderlichen Temperatur an einem vorab definierten Meß- bzw. Bezugspunkt innerhalb der jeweiligen Wandlervorrichtung, umfassen derartige Wandlervorrichtungen ferner zumeist zwei oder mehr jeweils mittels eines innerhalb des Zwischenraums angeordneten, mithin im Betrieb nicht von dem im Lumen des wenigstens einen Rohrs kontaktierten Temperaturfühler gebildeten Temperatursensoren, von denen wenigstens einer einen nämlichen Temperaturfühler thermisch leitend mit der Wandung verbindenden, beispielsweise mittels Wärmeleitkleber gebildeten, Kopplungskörper aufweist. Solche Temperaturfühler können beispielsweise ein Platin-Meßwiderstand, ein Thermistor oder ein Thermoelements oder aber mittels mehrerer solcher temperaturempfindlichen elektrischen bzw. elektronischen Bauteilen gebildete elektrische Schaltungen sein. Jeder der Temperatursensoren ist dafür eingerichtet, jeweils eine einer Temperatur an einer mittels des jeweiligen Temperaturfühlers gebildeten Temperaturmeßstelle entsprechende Meßstellentemperatur jeweils in ein entsprechendes Temperaturmeßsignal, nämlich eine die jeweilige Meßstellentemperatur repräsentierendes elektrisches Meßsignal, beispielsweise mit einer von nämlicher Meßstellentemperatur abhängigen elektrische Signalspannung und/oder einem von nämlicher Meßstellentemperatur abhängigen elektrischen Signalstrom, zu wandeln. Ziel-Temperatur kann bei solchen Wandlervorrichtungen beispielsweise eine Meßfluid-Temperatur, nämlich einer Temperatur des im Betrieb der Wandlervorrichtung im Lumen des wenigstens einen Rohrs geführten Fluids, und/oder eine Rohrtemperatur, nämlich eine Temperatur der vom jeweils im Lumen befindlichen Fluid kontaktierten Wandung des Rohrs sein.

Die Wandlervorrichtung kann ferner unter Bildung eines Meßsystem zum Messen wenigstens einer Meßgröße, beispielsweise nämlich der Meßfluid-Temperatur oder auch einer Dichte und/oder einer Viskosität, des im wenigstens einen Rohr der jeweiligen Wandlervorrichtung geführten Fluids an eine, beispielsweise mittels wenigstens eines Mikroprozessors gebildete, Meß- und Betriebs-Elektronik angeschlossen sein. Nämliche Meß- und Betriebs-Elektronik wiederum kann dafür eingerichtet sein, unter Verwendung der mittels der Wandlervorrichtung generierten wenigstens zwei Temperaturmeßsignale einen Meßwert zu generieren, der die wenigstens eine Meßgröße repräsentiert. Bei solchen Meßsystemen ist die Meß- und Betriebs-Elektronik typischerweise innerhalb wenigstens eines vergleichsweise robusten, insb. schlag-, druck-, und/oder wetterfesten, Elektronik-Gehäuse untergebracht. Das Elektronik-Gehäuse kann beispielsweise von der Wandlereinrichtung entfernt angeordnet und mit diesem nur über eine flexible Leitung verbunden sein; es kann aber auch direkt am Wandler-Gehäuse angeordnet bzw. daran fixiert sein. Weiterführende Beispiele für Wandlervorrichtungen der in Rede stehenden Art bzw. damit gebildete Meßsysteme sind u.a. in der EP-A 919 793, der US-A 2004/0187599, der US-A 2008/0127745, der US-A 2011/0113896, der US-A 47 68 384, der US-A 56 02 346, der US-A 60 47 457, der US-B 70 40 179, der US-B 75 49 319, der WO-A 01/02816, der WO-A 2009/051588, der WO-A 2009/134268, der WO-A 2012/018323, der WO-A 2012/033504, der WO-A 2012/067608 oder der WO-A 2012/115639 gezeigt. Darüber hinaus offenbart die Druckschrift EP 2 151 673 A2 eine Vorrichtung zum Messen der Temperatur eines einen Kanal durchströmenden Mediums. Bei in der industriellen Meß- und Automatisierungstechnik verwendeten Meßsystemen der vorbezeichneten Art ist die jeweilige Meß- und Betriebs-Elektronik üblicherweise über entsprechende elektrische Leitungen auch an ein vom jeweiligen Meßsystem zumeist räumlich entfernt angeordnetes und zumeist auch räumlich verteiltes übergeordnetes elektronisches Datenverarbeitungssystem elektrisch angeschlossen, an das die vom jeweiligen Meßsystem erzeugten Meßwerte mittels wenigstens eines diese entsprechend tragenden Meßwertesignals zeitnah, beispielsweise auch in Echtzeit, weitergegeben werden. Meßsysteme der in Rede stehenden Art sind zudem üblicherweise mittels eines innerhalb des übergeordneten Datenverarbeitungssystems vorgesehenen Datenübertragungsnetzwerks miteinander und/oder mit entsprechenden elektronischen Prozeß-Steuerungen verbunden, beispielsweise vor Ort installierte Speicherprogrammierbare Steuerungen (SPS) oder in einer entfernten Leitwarte installierte Prozeß-Leitrechnern, wohin die mittels des jeweiligen Meßsystems erzeugten und in geeigneter Weise digitalisierten und entsprechend codierten Meßwerte weitergesendet werden. Mittels solcher Prozeß-Leitrechner können die übertragenen Meßwerte weiterverarbeitet und als entsprechende Meßergebnisse z.B. auf Monitoren visualisiert und/oder in Steuersignale für andere als Stellgeräte ausgebildete Feldgeräte, wie z.B. Magnet-Ventile, Elektro-Motoren etc., umgewandelt werden. Da moderne Meßanordnungen zumeist auch direkt von solchen Leitrechnern aus überwacht und gegebenenfalls gesteuert und/oder konfiguriert werden können, werden in entsprechender Weise über vorgenannte, zumeist hinsichtlich der Übertragungsphysik und/oder der Übertragungslogik hybride Datenübertragungsnetzwerke dem Meßsystem zugewiesene Betriebsdaten gleichermaßen versendet. Dementsprechend dient das Datenverarbeitungssystem üblicherweise auch dazu, das vom Meßsystem gelieferte Meßwertesignal entsprechend den Anforderungen nachgelagerter Datenübertragungsnetzwerke zu konditionieren, beispielsweise geeignet zu digitalisieren und gegebenenfalls in ein entsprechendes Telegramm umzusetzen, und/oder vor Ort auszuwerten. Dafür sind in solchen Datenverarbeitungssystemen mit den jeweiligen Verbindungsleitungen elektrisch gekoppelte Auswerteschaltungen vorgesehen, die die vom jeweiligen Meßsystem empfangenen Meßwerte vor- und/oder weiterverarbeiten sowie, falls erforderliche, geeignet konvertieren. Zur Datenübertragung dienen in solchen industriellen Datenverarbeitungssystemen zumindest abschnittsweise, insb. serielle, Feldbusse, wie z.B. FOUNDATION FIELDBUS, RACKBUS-RS 485, PROFIBUS etc., oder beispielsweise auch Netzwerke auf Basis des ETHERNET-Standards sowie die entsprechenden, zumeist übergreifend standardisierten Übertragungs-Protokolle. Alternativ oder in Ergänzung können bei modernen Meßsystemen der in Rede stehenden Art Meßwerte auch drahtlos per Funk an das jeweilige Datenverarbeitungssystem übermittelt werden. Neben den für die Verarbeitung und Konvertierung der von den jeweils angeschlossenen Meßsystemen gelieferten Meßwerte erforderlichen Auswerteschaltungen weisen solche übergeordnete Datenverarbeitungssysteme zumeist auch der Versorgung der angeschlossenen Meßsysteme mit elektrischer Energie dienende elektrische Versorgungsschaltungen auf, die eine entsprechende, ggf. direkt vom angeschlossenen Feldbus gespeiste, Versorgungsspannung für die jeweilige Elektronik bereitstellen und die daran angeschlossenen elektrische Leitungen sowie die jeweiligen Elektroniken durchfließende elektrische Ströme treiben. Eine Versorgungsschaltung kann dabei beispielsweise genau einem Meßsystem bzw. einer entsprechenden Elektronik jeweils zugeordnet und zusammen mit der dem jeweiligen Meßsystem zugeordneten Auswerteschaltung - beispielsweise zu einem entsprechenden Feldbusadapter vereint - in einem gemeinsamen, z.B. als Hutschienen-Modul ausgebildeten, Elektronik-Gehäuse untergebracht sein. Es ist aber durchaus auch üblich, Versorgungsschaltungen und Auswerteschaltungen jeweils in separaten, ggf. voneinander räumlich entfernten Elektronik-Gehäusen unterzubringen und über externe Leitungen miteinander entsprechend zu verdrahten.

Wandlervorrichtungen der in Rede stehenden Art finden nicht zuletzt auch in dem Ermitteln von Meßgrößen, beispielsweise einer Massendurchflußrate, einer Dichte oder einer Viskosität, von in einer Prozeßleitung, beispielsweise einer Rohrleitung, geführten Fluiden dienenden vibronischen Meßsystemen Verwendung bzw. können integraler Bestandteil eines solchen Meßsystems sein.

Aufbau und Wirkungsweise solcher, mittels einer solchen Wandlervorrichtung gebildeten - beispielsweise auch als Coriolis-Massendurchfluß-Meßgeräte oder auch als Coriolis-Massendurchfluß-/Meßsysteme ausgebildeten - vibronischen Meßsysteme sind dem Fachmann an und für sich bekannt und beispielsweise auch in den eingangs erwähnten EP-A 919 793, US-A 2004/0187599, US-A 2008/0127745, US-A 2011/0113896, US-A 47 68 384, US-A 56 02 346, US-B 70 40 179, US-B 75 49 319, WO-A 01/02816, WO-A 2009/051588, WO-A 2009/134268, WO-A 2012/018323, WO-A 2012/033504, WO-A 2012/067608, WO-A 2012/115639, oder beispielsweise auch in der US-A 2001/0037690, der US-A 2011/0265580, der US-A 2011/0146416, der US-A 2011/0113896, der US-A 2010/0242623, der WO-A 2013/092104, der WO-A 01/29519, der WO-A 98/02725, der WO-A 94/21999 oder der WO-A 88/02853 ausführlich und detailiert beschrieben. Bei derartigen vibronischen Meßsystemen ist das wenigstens eine Rohr der jeweiligen Wandlervorrichtung im besonderen auch dafür eingerichtet, zum Messen der wenigstens einen Meßgröße im Betrieb zumindest zeitweise auch vibrieren gelassen zu werden während es mit zu messendem Fluid befüllt bzw. vom zu messenden Fluid durchströmt ist. Typischerweise wird das wenigstens eine Rohr mittels wenigstens eines darauf einwirkenden elektro-mechanischen, beispielsweise mittels eines am wenigstens einen Rohr fixierten Permanentmagneten und mittels einer damit wechselwirkende Erregerspule gebildeten, Schwingungserregers der Wandlervorrichtung aktiv zu Nutzschwingungen, nämlich mechanischen Schwingungen um eine dem jeweiligen Rohr zugehörige statische Ruhelage angeregt, insb. auch solche mechanischen Schwingungen, die geeignet sind, im strömenden Fluid von einer Massendurchflußrate, m, abhängige Corioliskräfte zu induzieren, und/oder die geeignet sind, im strömenden Fluid von einer Viskosität, $\eta$, abhängige Reibungskräfte zu induzieren, und/oder die geeignet sind, im strömenden Fluid von einer Dichte, $\rho$, abhängige Trägheitskräfte zu induzieren. Zum Erfassen von mechanischen Schwingungen des wenigstens einen Rohrs, nicht zuletzt auch dessen Nutzschwingungen, weisen die in solchen vibronischen Meßsystemen verwendeten Wandlervorrichtung ferner jeweils wenigstens einen, beispielsweise elektrodynamischen, Schwingungssensor auf, der dafür eingerichtet ist wenigstens ein Schwingungssignal, nämlich ein Schwingungsbewegungen des wenigstens einen Rohrs repräsentierendes elektrisches Meßsignal, beispielsweise mit einer von einer Geschwindigkeit der Schwingungsbewegungen des wenigstens einen Rohrs abhängigen elektrische Signalspannung, zu wandeln. Die Meß- und Betriebs-Elektronik solcher vibronischer Meßsysteme ist - nicht zuletzt für den Fall, daß der wenigstens eine Meßwert eine Dichte oder eine Viskosität des im wenigstens einen Rohr geführten Fluids repräsentiert -, weiters dafür eingerichtet, den wenigstens einen Meßwert unter Verwendung sowohl der mittels der Wandlervorrichtung generierten wenigstens zwei Temperaturmeßsignale als auch des wenigstens einen Schwingungssignals zu generieren, beispielsweise derart, daß die Meß- und Betriebs-Elektronik den wenigstens einen Meßwert basierend auf einer anhand des Schwingungssignals gemessenen Nutzfrequenz, nämlich einer von der zu messenden Meßgröße abhängigen Schwingfrequenz der Nutzschwingungen ermittelt und dafür eine allfällige Abhängigkeit nämlicher Nutzfrequenz auch von einer momentanen Meßfluid-Temperatur bzw. einer Temperaturverteilung innerhalb der Wandung des wenigstens einen Rohrs meßtechnisch kompensiert.

Bei in der industriellen Meß- und Automatisierungstechnik verwendeten modernen Meßsystemen, nicht zuletzt auch bei vibronischen Meßsystemen der vorbezeichneten Art, ist die Meß- und Betriebs-Elektronik zumeist mittels eines oder mehreren, ggf. auch als digitale Signalprozessoren (DSP) ausgebildeten Mikroprozessoren realisiert, derart, daß die Meß- und Betriebs-Elektronik die jeweiligen Meßwerte für die wenigstens eine Meßgröße durch numerische Verrechnung von aus Meßsignalen der jeweiligen Wandlervorrichtung, beispielsweise nämlich anhand von aus den wenigstens zwei Temperaturmeßsignalen bzw. dem wenigstens einen Schwingungssignal gewonnenen, digitalen Abtastswerten ermittelt und inform von entsprechenden Digitalwerten bereitstellt. Neben der Auswertung der Temperaturmeßsignale sowie des wenigstens einen Schwingungssignals dient die Meß- und Betriebs-Elektronik vibronischer Meßsysteme der vorbezeichneten Art typischerweise auch dazu, wenigstens ein, beispielsweise harmonisches und/oder getaktetes, Treibersignal für den wenigstens einen elektro-mechanischen Schwingungserreger zu generieren. Nämliches Treibersignal kann beispielsweise hinsichtlich einer Stromstärke und/oder einer Spannungshöhe geregelt sein.

Wie u.a. den eingangs erwähnten US-A 47 68 384, US-B 70 40 179 bzw. US-A 2008/0127745 zu entnehmen, ist ein besonderes Problem der Ermittlung einer Temperatur in Wandlervorrichtungen der in Rede stehenden Art, sei es einer Meßfluid-Temperatur oder einer Rohrtemperatur, darin zu sehen, daß die mittels der zwei, ggf. auch drei oder mehr Temperatursensoren erfaßten Meßstellentemperaturen zunächst jeweils eigentlich nur einer lokalen Temperatur an genau der mittels des jeweiligen Temperaturfühlers gebildeten Temperaturmeßstelle entsprechen, daß aber umgekehrt zumeist eigentlich eine lokale bzw. mittlere Temperatur an einem anderen Vorrichtungsreferenzpunkt, nämlich einem von jeder der Temperaturmeßstellen entfernten Bezugspunkt innerhalb der Wandlervorrichtung von Interesse ist (Ziel-Temperatur), beispielsweise nämlich - nicht zuletzt zwecks Ermittlung der Meßfluid-Temperatur - eine Temperatur innerhalb des Lumens des wenigstens einen Rohrs, und/oder - nicht zuletzt zwecks Korrektur einer Abhängigkeit der Nutzfrequenz von einer räumlichen Temperaturverteilung innerhalb der Wandung des wenigstens einen Rohrs - eigentlich eine räumlich gemittelte Rohrtemperatur als Ziel-Temperatur dienen sollen. Ein weiteres Problem kann zudem darin bestehen, daß infolge unvermeidlicher zeitlicher Änderungen der Meßfluid-Temperatur innerhalb nämlicher Wandlervorrichtung regelmäßig auch dynamische Wärmeausgleichsvorgänge stattfinden können, die ebenfalls, nicht zuletzt aufgrund der nur sehr begrenzten Anzahl an Temperaturmeßstellen bzw. aufgrund von deren gegenseitigem räumlichen Abstand, zu fehlerhaften Meßergebnissen in mittels Wandlervorrichtungen der in Rede stehenden Art gebildeten Meßsystemen führen können, sei es bei der Ermittlung der Meßfluidtemperatur oder, etwa im Falle der Verwendung der Wandlervorrichtung in einem vibronischen Meßsystem, bei den basierend auf Nutzschwingungen des wenigstens einen Rohrs ermittelten Meßgrößen, wie z.B. der Dichte und/oder der Viskosität eines im wenigstens einen Rohr geführten Fluids oder auch einer Massendurchflußrate eines durch das wenigstens einen Rohr strömenden Fluids. Darüberhinaus kann, wie u.a. auch in der eingangs erwähnten WO-A 2009/051588 erörtert, auch eine Wandlerumgebungstemperatur, nämliche eine Temperatur einer das Wandler-Gehäuse umgebenden Atmosphäre, bzw. eine zeitliche Änderung nämlicher Umgebungstemperatur die Genauigkeit, mit der Meßfluid-Temperatur bzw. die Rohrtemperatur mittels solcher Wandlervorrichtungen ermittelt werden kann, beeinträchtigen.

Weiterführende Untersuchungen seitens der Erfinder haben ferner ergeben, daß neben den vorbezeichneten Einflüssen überraschenderweise aber auch eine zwischen der Meßfluidtemperatur und der Rohrumgebungstemperatur, nämlich einer Temperatur des in dem zwischen der Innenfläche der Wandung des Wandler-Gehäuses und der Mantelfläche der Wandung des Rohrs gebildeten Zwischenraum vorgehalten, mithin das Rohr umhüllenden Fluidvolumens existierende Temperaturdifferenz bzw. deren zeitlich Änderung einen Einfluß auf die jeweiligen Temperaturmeßsignale nehmen kann. Grundsätzlich ist nämlich jeder der Temperartursensoren über eine jeweiligen dem Zwischenraum zugewandten Oberfläche - mehr oder weniger stark - auch an das im Zwischenraum vorgehaltene Fluidvolumen thermisch gekoppelt, derart, daß ein zwischen dem Fluid innerhalb des Lumens des Rohres und dem das Rohr umhüllenden Fluidvolumens regelmäßig stattfindender Wärmedurchgang teilweise auch durch den jeweiligen Temperatursensor führt. Aufgrund eines solchen Wärmedurchgangs bzw. damit einhergehend auch zwischen jedem der Temperartursensoren und dem im Zwischenraum gebildeten Fluidvolumen jeweils ablaufender Wärmetransportvorgänge ist die jeweilige Meßstellentemperatur somit nicht nur von der Rohr- bzw. die Meßfluidtemperatur abhängig, sondern regelmäßig auch von der Rohrumgebungstemperatur nennenswert mitbestimmt. Darüberhinaus konnte durch die Erfinder auch festgestellt werden, daß die vorbezeichnete thermische Kopplung gelegentlich ein solches Ausmaß annehmen kann, das hinsichtlich der für Meßsysteme der in Rede stehenden Art, nicht zuletzt auch für vibronische Meßsysteme angestrebten hohen Meßgenauigkeit eigentlich nicht mehr vernachlässigbar ist, bzw. daß umgekehrt ein Ignorieren des Einflusses nämlicher Temperaturdifferenz auf die jeweils erfaßte Meßstellentemperatur bzw. das diese repräsentierende Temperaturmeßsignal durchaus zu beträchtlich Meßfehlern führen kann, etwa derart, daß die mittels des jeweiligen Meßsystems jeweils ermittelten Meßwerte für die Ziel-Temperatur, insb. auch bei zeitlich konstant bleibender Ziel-Temperatur, gelegentlich um mehr als 0,5 K von der tatsächlichen bzw. wahren Ziel-Temperatur abweichen.

Dem Rechnung tragend besteht eine Aufgabe der Erfindung darin, Wandlervorrichtungen der vorgenannten Art so zu verbessern, daß auch bereits mit zwei jeweils außerhalb des Lumens des wenigstens einen Rohrs, gleichwohl innerhalb des Wandler-Gehäuses angeordneten Temperatursensoren eine im Vergleich zu herkömmlichen Wandlervorrichtungen präzisere Ermittlung einer an einem vorgegeben bzw. vorab festgelegten, gleichwohl von jedem der wenigstens zwei Temperatursensoren entfernt innerhalb des Wandler-Gehäuses lokalisierten Vorrichtungsreferenzpunkt herrschende Ziel-Temperatur, beispielsweise nämlich der Meßfluidtemperatur und/oder einer Rohrtemperatur, ermöglicht ist, bzw. daß nämliche Ziel-Temperatur, nicht zuletzt auch in einem für Wandlervorrichtungen der in Rede stehenden Art etwa zwischen -40°C und +150°C liegenden typischen Arbeitsbereich mit einem Meßfehler, der kleiner als 0,2 K ist, bestimmt werden kann; dies nicht zuletzt auch für den Fall, daß die jeweilige Rohr- bzw. Meßfluidtemperatur und/oder die jeweilige Wandler- bzw. Rohrumgebungstemperatur in nicht vorhersehbarer Weise zeitlich veränderlich sind bzw. die zwischen der Meßfluidtemperatur und der Rohrumgebungstemperatur existierende Temperaturdifferenz über einen weiten Temperaturbereich schwankt.

Zur Lösung der Aufgabe besteht die Erfindung in einem im Anspruch 1 beanspruchten Messsystem. Ein Grundgedanke der Erfindung besteht darin, einen - in herkömmlichen Meßsystemen der in Rede stehenden Art, nicht zuletzt auch in herkömmlichen vibronischen Meßsystemen, bei der Ermittlung der Meßwerte für eine jeweilige Ziel-Temperatur, beispielsweise nämlich einer Rohrtemperatur und/oder einer Meßfluidtemperatur, bzw. auch bei der Ermittlung von Meßwerten für die Dichte und/oder die Viskosität bis anhin nicht berücksichtigten - Einfluß einer zwischen der Meßfluidtemperatur bzw. der Rohrtemperatur einerseits und der Rohrumgebungstemperatur anderseits existierenden, regelmäßig zudem auch über einen weiten Temperaturbereich schwankenden Temperaturdifferenz dadurch in für eine Messung bzw. meßtechnische Verarbeitung zugänglichen Weise zu erfassen, indem mittels zweier thermisch gut, gleichwohl unterschiedlich stark an das Rohr der Wandlervorrichtung und/oder unterschiedlich stark an das das Rohr umgebende Fluidvolumen gekoppelte Temperaturfühler gebildeter Temperatursensor verwendet wird, so daß im Ergebnis die mittels des ersten der beiden Temperaturfühler gebildete Temperaturmeßstelle eine Meßstellentemperatur annimmt, die von einer Meßstellentemperatur der mittels des zweiten der beiden Temperaturfühler gebildeten Temperaturmeßstelle abweicht. In Kenntnis der durch den jeweiligen konstruktiven Aufbau des Temperatursensors bedingten, mithin vorab sehr genau bekannten Größen bzw. Verhältnisse der für die Wärmeleitungsvorgänge durch die Temperatursensoren relevanten Wärmewiderstände kann anhand der so erzwungenen Abweichung der beiden Meßstellentemperaturen voneinander hernach die zwischen der Meßfluidtemperatur und der Rohrumgebungstemperatur existierende Temperaturdifferenz bzw. basierend darauf die jeweilige Ziel-Temperatur, beispielsweise nämlich die Rohrtemperatur oder auch die Meßfluidtemperatur, genau ermittelt werden.

Die Erfindung sowie weitere vorteilhafte Ausgestaltungen davon werden nachfolgend anhand von Ausführungsbeispielen näher erläutert, die in den Figuren der Zeichnung dargestellt sind. Gleiche Teile sind in allen Figuren mit denselben Bezugszeichen versehen; wenn es die Übersichtlichkeit erfordert oder es anderweitig sinnvoll erscheint, wird auf bereits erwähnte Bezugszeichen in nachfolgenden Figuren verzichtet. Weitere vorteilhafte Ausgestaltungen oder Weiterbildungen, insb. auch Kombinationen zunächst nur einzeln erläuterter Teilaspekte der Erfindung, ergeben sich ferner aus den Figuren der Zeichnung wie auch den Unteransprüchen an sich. Im einzelnen zeigen:

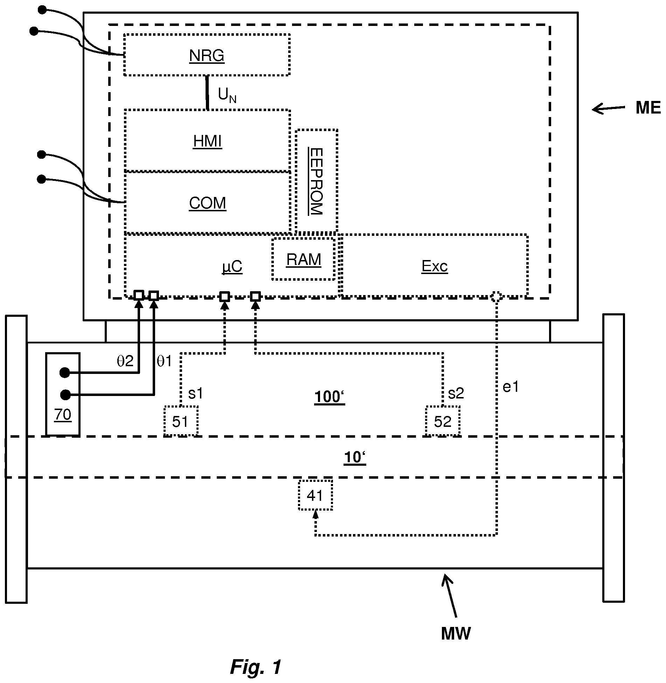

Fig. 1      schematisch ein Ausführungsbeispiel für ein, insb. für die Verwendung in der industriellen Meß- und Automatisierungstechnik geeignetes, Meßsystem mit einer ein Wandler-Gehäuse aufweisenden Wandlervorrichtung und einer in einem - hier direkt am Wandler-Gehäuse befestigten - Elektronik-Gehäuse untergebrachten Meß- und Betriebs-Elektronik;

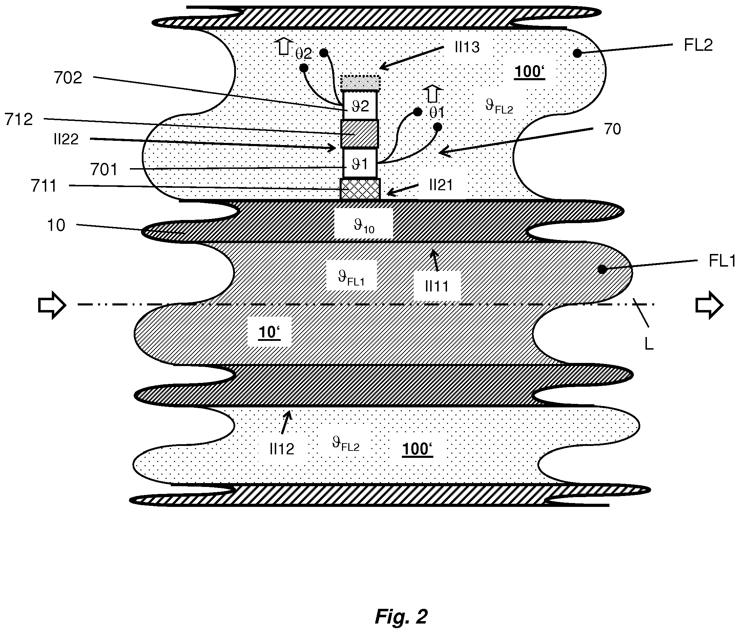

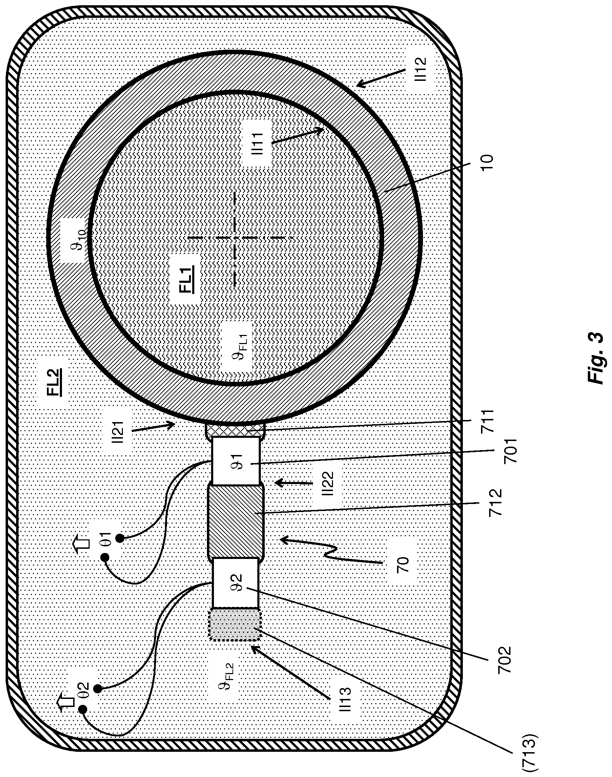

Fig. 2, 3      in unterschiedlichen geschnittenen Seitenansichten Ausführungsbeispiele einer für ein Meßsystem gemäß Fig. 1 geeigneten Wandlervorrichtung mit einem Rohr und mit zwei daran befestigten, die Wandung des Rohrs kontaktierenden Temperatursensoren;

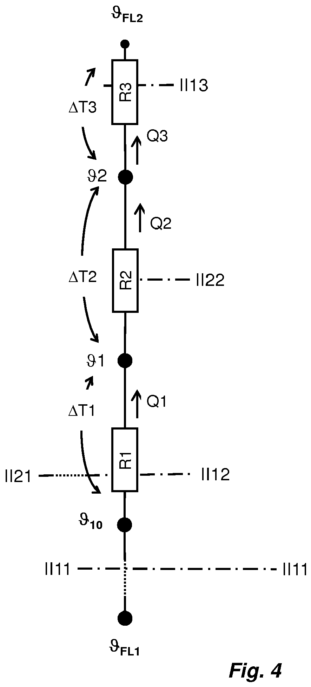

Fig. 4      ein mittels einer Vielzahl diskreter Wärmewiderstände nach Art eines Ersatzschaltbildes gebildetes, der Erklärung von in einer Wandlervorrichtung gemäß Fig. 2, 3 fließenden Wärmströme bzw. entsprechender Temperaturabfälle innerhalb nämlicher Wandlervorrichtung dienendes Widerstandsnetzwerk;

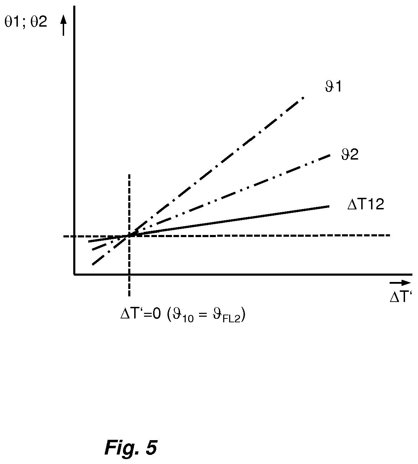

Fig. 5      in einem Diagramm Abhängigkeiten von in einer in einer Wandlervorrichtung gemäß Fig. 2, 3 mittels deren jeweiligen Temperatursensoren erfaßten Meßstellentemperaturen (bzw. davon abgeleiteten Temperaturmeßsignalen) von einer Rohrtemperatur und einer Rohrumgebungstemperatur bzw. von einer dazwischen existierenden Temperaturdifferenz; und

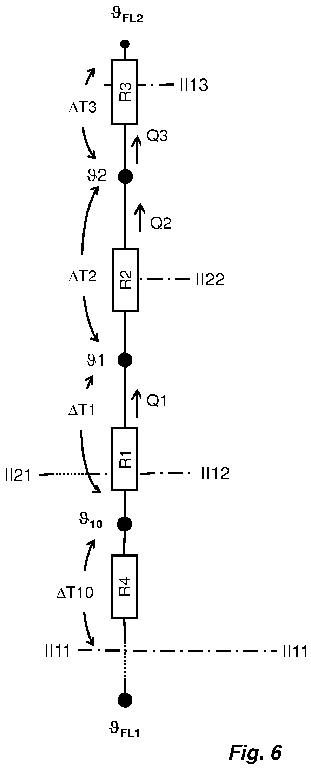

Fig. 6 ein mittels einer Vielzahl diskreter Wärmewiderstände nach Art eines Ersatzschaltbildes gebildetes, der Erklärung von in einer Wandlervorrichtung gemäß Fig. 2, 3, einschließlich des Rohrs, fließenden Wärmströme bzw. entsprechender Temperaturabfälle dienendes Widerstandsnetzwerk.

In Fig. 1 ist schematisch ein Meßsystem zum Messen wenigstens einer Meßgröße x eines eine, ggf. auch zeitlich veränderliche Meßfluidtemperatur $\vartheta_{FL1}$ aufweisenden strömenden Fluids FL1 (Meßfluid), wie z.B. eines Gases, einer Flüssigkeit oder einer fließfähigen Dispersion, bzw. zum wiederkehrenden Ermitteln von nämliche Meßgröße momentan repräsentierenden Meßwerten $X_x$ schematisch dargestellt. Meßgröße x kann beispielsweise eine Dichte oder eine Viskosität, mithin eine solche Meßgröße sein, die selbst eine gewisse Abhängigkeit von der jeweiligen Meßfluidtemperatur aufweist und/oder bei deren Umwandlung in den jeweiligen Meßwert $X_x$ die Wandlervorrichtung einen tem-peraturabhängigen Meßfehler provoziert; Meßgröße kann aber beispielsweise auch eine - im weiteren auch als Ziel-Temperatur bezeichnete - interessierende Temperatur an einem für das Meßsystem vorgegebenen, gleichwohl innerhalb der Wandlervorrichtung lokalisierten Vorrichtungsreferenzpunkt (poi) sein. Das Meßsystem umfaßt dafür eine Wandlervorrichtung MW zum Erzeugen von von der wenigstens einen Meßgröße abhängigen Meßsignalen sowie eine mit dieser elektrisch verbundene, insb. im Betrieb von extern via Anschlußkabel und/oder mittels interner Energiespeicher mit elektrischer Energie versorgte, Meß- und Betriebs-Elektronik ME zum Erzeugen der die mittels der Wandlervorrichtung erfaßte Meßgröße(n) repräsentierenden Meßwerte bzw. zum sequentiellen Ausgeben solcher Meßwerte als einen jeweils aktuell gültigen Meßwert des Meßsystems an einem entsprechenden Meßausgang.

Die, z.B. mittels wenigstens eines Mikroprozessors und/oder mittels eines digitalen Signalprozessors (DSP) gebildete, Meß- und Betriebs-Elektronik ME kann, wie in der Fig. 1 angedeutet, beispielsweise in einem einzigen, ggf. auch gekammerten, Elektronik-Gehäuse 200 des Meßsystems untergebracht sein. Nämliches Elektronik-Gehäuse 200 kann je nach Anforderung an das Meßsystem beispielsweise auch schlag- und/oder auch explosionsfest und/oder hermetisch dicht ausgebildet sein. Die Meßgerät-Elektronik ME weist, wie auch in Fig. 1 schematisch nach Art eines Blockschaltbildes dargestellt, eine Meßsignale der Wandlervorrichtung MW verarbeitende, beispielsweise mittels eines Mikroprozessors gebildete, Auswerte-Schaltung $\mu C$ auf, die im Betrieb die entsprechende Meßwerte für die mittels des Meßsystems zu erfassenden Meßgröße generiert. Die mittels der Meß- und Betriebs-Elektronik ME generierten Meßwerte $X_x$ können beim hier gezeigten Meßsystem beispielsweise vor Ort, nämlich unmittelbar an der mittels des Meßsystems gebildeten Meßstelle, angezeigt werden. Zum Visualisieren von mittels des Meßsystems erzeugten Meßwerten und/oder gegebenenfalls Meßgerät intern generierten Systemstatusmeldungen, wie etwa einer erhöhte Meßungenauigkeit bzw. -unsicherheit signalisierende Fehlermeldung oder einem eine Störung im Meßsystem selbst oder an der mittels des Meßsystems gebildeten Meßstelle signalisierenden Alarm, vor Ort kann das Meßsystem, wie auch Fig. 1 angedeutet, beispielsweise ein mit der Meß- und Betriebs-Elektronik kommunizierendes, ggf. auch portables, Anzeige- und Bedienelement HMI aufweisen, wie etwa ein im Elektronik-Gehäuse 200 hinter einem darin entsprechend vorgesehenen Fenster plaziertes LCD-, OLED- oder TFT-Display sowie eine entsprechende Eingabetastatur und/oder ein Touchscreen. In vorteilhafter Weise kann die, beispielsweise auch (re-)programmier- bzw. fernparametrierbare, Meß- und Betriebs-Elektronik ME zudem so ausgelegt sein, daß sie im Betrieb des Meßsystems mit einem diesem übergeordneten elektronischen Datenverarbeitungssystem, beispielsweise einer speicherprogrammierbaren Steuerung (SPS), einem Personalcomputer und/oder einer Workstation, via Datenübertragungssystem, beispielsweise einem Feldbussystem, wie etwa FOUNDATION FIELDBUS, PROFIBUS, und/oder drahtlos per Funk, Meß- und/oder andere Betriebsdaten austauschen kann, wie etwa aktuelle Meßwerte, Systemdiagnosewerte, Systemstatusmeldungen oder aber auch der Steuerung des Meßsystems dienende Einstellwerte.

Die Meß- und Auswerteschaltung $\mu C$ der Meß- und Betriebs-Elektronik kann beispielsweise mittels eines wenigstens einen Mikroprozessor und/oder einen digitalen Signalprozessor (DSP) aufweisenden Mikrocomputers realisiert sein. Die davon auszuführenden Programm-Codes wie auch der Steuerung des jeweiligen Meßsystems dienliche Betriebsparameter, wie z.B. auch Sollwerte für mittels der Meß- und Betriebs-Elektronik realisierte Regler bzw. Regleralgorithmen, können - wie auch in der Fig. 1 schematisch dargestellt -, z.B. in einem nicht-flüchtigen Datenspeicher EEPROM der Meß- und Betriebs-Elektronik ME persistent gespeichert sein und beim Starten desselben in einen, z.B. im Mikrocomputer integrierten, flüchtigen Datenspeicher RAM geladen werden. Für derartige Anwendungen geeignete Mikroprozessoren sind z.B. solche vom Typ TMS320VC33, wie sie von der Firma Texas Instruments Inc. am Markt angeboten sind.

Des weiteren kann die Meß- und Betriebs-Elektronik ME so ausgelegt sein, daß sie von einer externen Energieversorgung, beispielsweise auch über das vorgenannte Feldbussystem, gespeist werden kann. Dafür kann die Meß- und Betriebs-Elektronik ME beispielsweise eine solche interne Energieversorgungsschaltung NRG zum Bereitstellen interner Versorgungsspannungen $U_N$ aufweisen, die im Betrieb von einer im vorgenannten Datenverarbeitungssystem vorgesehenen externen Energieversorgung über das vorgenannte Feldbussystem gespeist wird. Hierbei kann das Meßsystem beispielsweise als sogenanntes Vierleitergerät ausgebildet sein, bei dem die interne Energieversorgungsschaltung der Meßgerät-Elektronik ME mittels eines ersten Paars Leitungen mit einer externen Energieversorgung und die interne Kommunikationsschaltung der Meß- und Betriebs-Elektronik ME mittels eines zweiten Paars Leitungen mit einer externen Datenverarbeitungsschaltung oder einem externen Datenübertragungssystem verbunden werden kann. Die Meß- und Betriebs-Elektronik kann ferner aber auch so ausgebildet sein, daß sie, wie u.a. auch in der eingangs erwähnten US-B 72 00 503, die US-B 77 92 646 gezeigt, mittels einer, beispielsweise als 4-20 mA-Stromschleife konfigurierten, Zweileiter-Verbindung mit dem externer elektronischen Datenverarbeitungssystem elektrisch verbindbar ist und darüber mit elektrischer Energie versorgt wird sowie Meßwerte zum Datenverarbeitungssystem übertragen kann. Für den typischen Fall, daß das Meßsystem für eine Ankopplung an ein Feldbus- oder ein anderes elektronisches Kommunikationssystem vorgesehen ist, kann die, beispielsweise auch vor Ort und/oder via Kommunikationssystem (re-)programmierbare, Meß- und Betriebs-Elektronik ME zu dem eine entsprechende - beispielsweise einem der einschlägigen Industriestandards, wie etwa der IEC 61158/IEC 61784, konforme - Kommunikations-Schnittstelle COM für eine Datenkommunikation aufweisen, z.B. zum Senden von Meß- und/oder Betriebsdaten, mithin den die jeweilige Meßgröße repräsentierenden Meßwerte an die bereits erwähnte speicherprogrammierbare Steuerung (SPS) oder ein übergeordnetes Prozeßleitsystem und/oder zum Empfangen von Einstelldaten für das Meßsystem. Das elektrische Anschließen der Wandlervorrichtung an die Meß- und Betriebs-Elektronik kann mittels entsprechender Anschlußleitungen erfolgen, die aus dem Elektronik-Gehäuse 200, beispielsweise via Kabeldurchführung, in das Wandler-Gehäuse 100 geführt und zumindest abschnittsweise auch innerhalb des Wandler-Gehäuses 100 verlegt sind. Die Anschlußleitungen können dabei zumindest anteilig als zumindest abschnittsweise als von einer elektrischen Isolierung umhüllte Leitungsdrähte ausgebildet sein, z.B. inform von "Twisted-pair"-Leitungen, Flachbandkabeln und/oder Koaxialkabeln. Alternativ oder in Ergänzung dazu können die Anschlußleitungen zumindest abschnittsweise auch mittels Leiterbahnen einer, beispielsweise flexiblen bzw. teilweise starren und teilweise flexiblen, gegebenenfalls auch lackierten Leiterplatte gebildet sein, vgl. hierzu auch die eingangs erwähnten US-A 2001/0037690 oder WO-A 96/07081.

Die Wandlervorrichtung des Meßsystems dient - wie in Fig. 2 schematisch dargestellt bzw. einer Zusammenschau der Fig. 1 und 2 ersichtlich - im besonderen dazu, im Betrieb ein Teilvolumen des jeweils zu messsenden Fluid FL1 zu führen bzw. von nämlichem Fluid durchströmt zu werden sowie verschiedene Meßsignale für mittels der Wandlervorrichtung jeweils zu erfassende physikalische Meßgrößen, insb. nämlich für an verschiedenen Meßpunkten innerhalb der Wandlervorrichtung herrschende Meßstellentemperaturen, bereitzustellen. Die Wandlervorrichtung ist dafür mit einem Wandler-Gehäuse 100 sowie einem darin untergebrachten ein von einer, beispielsweise metallischen, Wandung umhülltes Lumen 10' aufweisenden Rohr 10 ausgestattet, wobei das Rohr 10 innerhalb einer von einer, beispielsweise metallischen und/oder als äußere Schutzhülle dienenden, Wandung des Wandler-Gehäuses umhüllten Kavität des Wandler-Gehäuses angeordnet ist, derart, daß zwischen einer nämlicher Kavität zugewandte Innenfläche 100+ der Wandung des Wandler-Gehäuses 100 und einer Mantelfläche 10# der Wandung des Rohrs 10, nämlich einer der Kavität zugewandten Außenfläche der Wandung des Rohrs 10 ein Zwischenraum 100' gebildet ist. Das Rohr 10 ist im besonderen dafür eingerichtet, in dessen Lumen das Fluid FL1 (bzw. ein Teilvolumen davon) zu führen, derart, daß eine dem Lumen zugewandte Innenfläche 10+ der Wandung des Rohrs von im Lumen geführtem Fluid FL1 unter Bildung einer ersten Grenzfläche II11 erster Art, nämlich einer Grenzfläche zwischen einer fluiden und einer festen Phase, kontaktiert ist, wodurch im Ergebnis eine Rohrtemperatur $\vartheta_{10}$, nämlich eine von der Wandung des Rohrs 10 angenommene Temperatur, auch von der Meßfluidtemperatur $\vartheta_{FL1}$ des momentan im Lumen befindlichen Fluids FL1 mitbestimmt ist.

Die Wandlervorrichtung kann ferner als ein Meßwandler vom Vibrationstyp, wie sie beispielsweise in als Coriolis-Massendurchfluß-Meßgerät, als Dichte-Meßgerät und/oder als Viskositäts-Meßgerät ausgebildeten vibronischen Meßsystemen Verwendung finden, bzw. als Komponente eines solchen Meßwandlers ausgebildet sein. Dementsprechend ist das Rohr nach einer weiteren Ausgestaltung der Erfindung ferner dafür eingerichtet, vom Fluid FL1 durchströmt und währenddessen vibrieren gelassen zu werden; dies beispielsweise derart, daß das Rohr mechanischen Schwingungen um eine diesem zugehörige statische Ruhelage ausführt, die geeignet sind, im strömenden Fluid von einer Massendurchflußrate m abhängige Corioliskräfte und/oder im Fluid von einer Viskosität η abhängige Reibungskräfte zu induzieren, und/oder im Fluid von einer Dichte ρ abhängige Trägheitskräfte zu induzieren. Nicht zuletzt für diesen Fall ist die Wandlervorrichtung nach einer weiteren Ausgestaltung der Erfindung ferner mit einem Schwingungserreger 41 zum Anregen und Aufrechterhalten von mechanischen Schwingungen des wenigstens einen Rohrs um eine zugehörige statische Ruhelage, sowie wenigstens einem Schwingungssensor 51 zum Erfassen von mechanischen Schwingungen des wenigstens einen Rohrs und zum Generieren eines Schwingungsbewegungen des Rohrs repräsentierenden Schwingungsmeßsignals s1 ausgestattet. Für diesen Fall, daß die Wandlervorrichtung als Meßwandler vom Vibrationstyp bzw. als eine Komponente davon ausgebildet ist, ist in der Meß- und Betriebs-Elektronik ME ferner eine entsprechende, nämlich dem Ansteuern der Wandlervorrichtung dienende, ggf. auch elektrisch mit der Meß- und Auswerte-Schaltung μC verbundene Treiber-Schaltung Exc vorgesehen, die dafür eingerichtet ist, wenigstens ein elektrisches Treibersignal e1 für einen ggf. in der Wandlervorrichtung vorgesehenen Schwingungserreger bereitzustellen. Im übrigen kann die Meß- und Betriebs-Elektronik für diesen Fall auch so ausgebildet sein, daß sie hinsichtlich des Schaltungsaufbaus einer der aus dem eingangs erwähnten Stand der Technik, beispielsweise etwa der US-B 63 11 136, bekannten Meß- und Betriebs-Elektroniken oder beispielsweise auch einem Meßumformer eines seitens der Anmelderin, z.B. unter der Bezeichung "PROMASS 83F" bzw. auf "http://www.de.endress.com/#product/83F", angebotenen Coriolis-Massendurchfluß/-Dichte-Meßgeräts entspricht.

Das Rohr 10 der erfindungsgemäßen Wandlervorrichtung kann zumindest abschnittsweise gerade, mithin abschnittsweise (hohl-)zylindrisch, beispielsweise nämlich kreiszylindrisch, und/oder zumindest abschnittsweise gekrümmt, beispielsweise nämlich kreisbogenförmig gekrümmt, ausgebildet sein. Im hier gezeigten Ausführungsbeispiel ist das - hier überwiegend bzw. gänzlich gerade - Rohr, mithin die damit gebildete Wandlervorrichtung ferner dafür eingerichtet, in den Verlauf einer das Fluid führenden, beispielsweise als starre Rohrleitung ausgebildeten, Prozeßleitung eingesetzt zu werden. Im besonderen ist die Wandlervorrichtung ferner dafür vorgesehen, lösbar mit der, beispielsweise als metallische Rohrleitung ausgebildeten, Prozeßleitung montiert zu werden. Dafür sind einlaßseitig der Wandlervorrichtung ein dem Anschluß des Rohrs an ein das Fluid FL1 zuführendes Leitungssegment der Prozeßleitung dienender erster Anschlußflansch 13 und auslaßseitig der Wandlervorrichtung ein dem Anschluß des Rohrs an ein das Fluid wieder abführendes Leitungssegment der Prozeßleitung dienender zweiter Anschlußflansch 14 vorgesehen. Die Anschlußflansche 13, 14 können dabei, wie bei Wandlervorrichtung der in Rede stehenden Art durchaus üblich, auch endseitig in das Wandler-Gehäuse 100 integriert, nämlich als integraler Bestandteil des Wandler-Gehäuses ausgebildet sein.

Gemäß einer weiteren Ausgestaltung der Erfindung ist ferner vorgesehen, daß die Wandung des Rohrs zumindest anteilig - beispielsweise auch überwiegend oder gänzlich - aus einem Material besteht, von dem eine spezifische Wärmeleitfähigkeit $\lambda$10 größer als 10 W / (m · K) und eine spezifische Wärmekapazität cp10 kleiner als 1000 J / (kg · K) sind. Wie bereits angedeutete, kann nämliche Wandung beispielsweise aus einem Metall bzw. einer Metall-Legierung, beispielweise nämlich Titan, Zirkonium oder Tantal bzw. einer entsprechenden Legierung davon, einem Stahl oder einer Nickelbasislegierung, bestehen. Ferner ist vorgesehen, daß die Wandung des Rohrs gemäß einer weiteren Ausgestaltung der Erfindung eine Wanddicke s, die mehr als 0,5 mm beträgt, und/oder einen Innendurchmesser, der mehr als 0,5 mm beträgt, aufweist. Alternativ oder in Ergänzung ist das Rohr ferner so bemessen, daß es ein Innendurchmesser-zu-Wandstärke-Verhältnis D / s, definiert als ein Verhältnis eines Innendurchmesser D des Rohrs zu einer Wanddicke s der Wandung des Rohrs, aufweist, das weniger als 25:1 beträgt. Gemäß einer weiteren Ausgestaltung der Erfindung ist ferner vorgesehen, daß die Wanddicke weniger als 10 mm und/oder der Innendurchmesser D weniger als 200 mm beträgt bzw. daß das Rohr so bemessen ist, daß das Innendurchmesser-zu-Wandstärke-Verhältnis D / s mehr als 5:1 beträgt.

Zum Erfassen von innerhalb der Wandlervorrichtung herrschenden Meßstellentemperaturen und zum Konvertieren derselben in ein jeweiliges Temperaturmeßsignal umfaßt die erfindungsgemäße Wandlervorrichtung - wie in Fig. 1 bzw. 2 gezeigt - ferner einen Temperatursensor 70. Der Temperatursensor 70 ist - wie auch in Fig. 2 schematisch dargestellt - mittels eines innerhalb des Zwischenraums 100' angeordneten ersten Temperaturfühlers 701 und mittels eines ebenfalls innerhalb des Zwischenraums 100' angeordneten zweiten Temperaturfühlers 702 gebildet. Die beiden Temperaturfühler sind so positioniert, daß der Temperaturfühler 701 und der Temperaturfühler 702 - wie auch in Fig. 3 angedeutet - bezogen auf nämliche Längsachse L des Rohrs bzw. eines geraden Rohrsegments davon radial voneinander beabstandet sind. Die beiden Temperaturfühler 701, 702 können dafür - wie aus einer Zusammenschau der Fig. 2 und 3 ersichtlich - beispielsweise auch voneinander beabstandet auf ein und demselben, zur Längsachse L senkrechten Radius des Rohrs positioniert sein. Zwecks Herstellung einer thermisch leitenden Verbindung zwischen dem Temperaturfühlers 701 und der Wandung des Rohrs weist der Temperatursensor ferner einen nämlichen Temperaturfühler 701 thermisch leitend mit der Wandung des Rohrs koppelnden ersten Kopplungskörper 711 auf. Darüberhinaus sind der Temperaturfühler 701 und der Temperaturfühler 702 mittels eines zweiten Kopplungskörpers 712 des Temperatursensors thermisch leitend miteinander gekoppelt. Ferner kann jeder der Temperaturfühler 701, 702 mit dem jeweils zugehörigen Kopplungskörper 711 bzw. 712 mittels einer geeigneten stoffschlüssigen, gleichwohl thermisch gut leitfähigen Verbindung, beispielsweise nämlich einer Klebeverbindung oder einer Löt- bzw. Schweißverbindung, und/oder durch Einbetten in den jeweiligen Kopplungskörper 711 bzw. 712 verbunden sein.

Der Temperatursensor der erfindungsgemäßen Wandlervorrichtung ist dafür eingerichtet, eine erste Meßstellentemperatur $\vartheta$1, nämlich eine Temperatur an einer mittels des Temperaturfühlers 701 gebildeten ersten Temperaturmeßstelle, in ein erstes Temperaturmeßsignal $\theta$1, nämlich ein die Meßstellentemperatur $\vartheta$1 repräsentierendes erstes elektrisches Meßsignal sowie eine zweite Meßstellentemperatur $\vartheta$2, nämlich eine Temperatur an einer mittels des Temperaturfühlers 702 gebildeten zweiten Temperaturmeßstelle, in ein zweites Temperaturmeßsignal $\theta$2, nämlich ein die Meßstellentemperatur $\vartheta$2 repräsentierendes zweites elektrisches Meßsignal zu wandeln. Jeder der beiden Temperaturfühler 701, 702 kann beispielsweise jeweils mittels eines Platin-Meßwiderstandes, eines Thermistors oder eines Thermoelements gebildet sein. Dementsprechend kann jedes der Temperaturmeßsignale $\theta$1, $\theta$2 beispielsweise so ausgebildet sein, daß es eine von der jeweiligen Meßstellentemperatur abhängige elektrische Signalspannung und/oder einen von nämlicher Meßstellentemperatur abhängigen elektrischen Signalstrom aufweist. Darüberhinaus ist die Meß- und Betriebs-Elektronik ME nach einer weiteren Ausgestaltung der Erfindung dafür eingerichtet, den wenigstens einen Meßwert $X_x$ unter Verwendung sowohl des mittels der Wandlervorrichtung generierten ersten Temperaturmeßsignals $\theta$1 als auch zumindest des mittels der Wandlervorrichtung generierten zweiten Temperaturmeßsignals $\theta$2 zu generieren.

Zwecks Erzielung einer mechanisch festen und beständigen, gleichwohl thermisch gut leitfähigen Verbindung zwischen der Wandung des Rohrs und dem Temperatursensor 70 ist dieser gemäß einer weiteren Ausgestaltung der Erfindung stoffschlüssig mit der Mantelfläche 10# der Wandung des Rohrs 10 verbunden, beispielsweise nämlich adhäsiv oder mittels Löt- bzw. Schweißverbindung. Zum Herstellen einer solchen stoffschlüssigen Verbindung zwischen Rohr 10 und Temperatursensor 70 kann z.B. ein Wärmeleitkleber, mithin ein Kunststoff auf Basis von Epoxidharz oder auf Basis von Silikon, beispielsweise nämlich ein Silikonelastomere oder ein 1- oder 2-komponentiger Silikonkautschuk, wie sie u.a. auch von der

Fa. DELO Industrie Klebstoffe GmbH & Co KGaA, 86949 Windach, DE unter der Bezeichnung DELO-GUM® 3699 gehandelt werden, dienen. Der zum Verbinden von Temperatursensor 70 und Rohr 10 verwendete Kunststoff kann zwecks Erzielung einer möglichst guten Wärmeleitung zudem auch mit Metalloxid-Partikeln versetzt sein. Ferner ist es zudem auch möglich, den ersten Kopplungskörper 711 selbst - teilweise oder gänzlich - aus Kunststoff herzustellen, beispielsweise auch in der Weise, daß ein zwischen Temperaturfühler 701 und Wandung plazierter bzw. sowohl die Mantelfläche 10# der Wandung als auch den Temperaturfühler 701 kontaktierendes, ggf. auch monolithisches Kunststoffformteil als erster Kopplungskörper 711 dient bzw. der gesamte erste Kopplungskörper 711 aus - beispielsweise ein oder mehrlagig auf die Wandung des Rohrs 10 appliziertem, mithin zwischen der Wandung des Rohrs und dem ersten Temperaturfühler 701 plaziertem - Kunststoff besteht. Gleichermaßen wie der Kopplungskörper 711 kann auch der zweite Kopplungskörper 712 aus einem Kunststoff oder einem Metall hergestellt sein. Ferner können die beiden Kopplungskörper 711, 712 durch entsprechende Auswahl der zu deren jeweiliger Herstellung jeweils tatsächlich verwendeten Materialien ohne weiteres so ausgebildet werden, daß die spezifische Wärmeleitfähigkeit $\lambda$712 eines Materials des zweiten Kopplungskörpers 712 kleiner als die spezifische Wärmeleitfähigkeit $\lambda$711 eines Materials des ersten Kopplungskörpers 711 und/oder die spezifische Wärmekapazität cp712 des Materials des zweiten Kopplungskörpers 712 kleiner als die spezifische Wärmekapazität cp711 des Materials des ersten Kopplungskörpers 711 ist. Nach einer anderen Ausgestaltung der Erfindung ist auch der zweite Kopplungskörper 712 zumindest teilweise aus einem Kunststoff hergestellt bzw. mittels eines entsprechend zwischen dem Temperaturfühler 701 und dem Temperaturfühler 702 plazierten Kunststoffkörpers gebildet. Darüberhinaus kann der zweite Kopplungskörper 712 stoffschlüssig mit Temperaturfühler 701 verbunden sein, beispielsweise nämlich auch adhäsiv oder mittels einer Schweiß- bzw. Lötverbindung. Gemäß einer weiteren Ausgestaltung der Erfindung besteht der erste Kopplungskörper 712 zumindest anteilig, beispielsweise auch überwiegend oder gänzlich, aus einem Material, beispielsweise nämlich einem Kunststoff, einer Keramik bzw. einem Metall, von dem eine spezifische Wärmeleitfähigkeit $\lambda$712 kleiner als 10 W / (m · K) bzw. und/oder von dem eine spezifische Wärmekapazität cp712 kleiner 1000 J / (kg · K) ist.

Wie in der Fig. 2 bzw. der Fig. 3 schematisch jeweils dargestellt, ist der Temperaturfühler 701 thermisch an das Rohr gekoppelt, indem der erste Kopplungskörper 711 die Mantelfläche 10# der Wandung des Rohrs unter Bildung einer ersten Grenzfläche II21 zweiter Art, nämlich einer Grenzfläche zwischen zwei festen Phasen, kontaktiert, und ist im weiteren Verlauf der Temperaturfühler 702 thermisch an das Rohr gekoppelt, indem der zweite Kopplungskörper 712 den ersten Kopplungskörper 711 unter Bildung einer zweiten Grenzfläche II22 zweiter Art kontaktiert. Jede der beiden Grenzflächen II21, II22 weist dabei jeweils eine durch die konkrete Bauform des jeweiligen Kopplungskörpers 711 bzw. 712 bedingte, mithin vorgegebenen Flächeninhalt auf. Dementsprechend wirkt somit - wie auch in Fig. 4 anhand eines Ersatzschaltbildes für ein mittels einer Vielzahl diskreter Wärmewiderstände gebildeten Widerstandsnetzwerks vereinfacht dargestellt - einem aus einer zwischen der Grenzfläche II21 zweiter Art und der ersten Temperaturmeßstelle herrschenden Temperaturdifferenz $\Delta$T1 resultierenden, gleichwohl durch nämliche Grenzfläche II21 insgesamt hindurchtretenden und weiter zur ersten Temperaturmeßstelle fließenden Wärmestrom Q1 ein mit der ersten Temperaturmeßstelle thermisch leitend verbundener - hier nämlich vornehmlich durch Wärmeleitung (Konduktion) bestimmter - erster Wärmewiderstand R1 (R1 = $\Delta$T1 / Q1) entgegen, und wirkt somit einem aus einer zwischen der Grenzfläche II22 zweiter Art bzw. der dort gebildeten der ersten Temperaturmeßstelle und der zweiten Temperaturmeßstelle herrschenden Temperaturdifferenz $\Delta$T2 resultierenden, gleichwohl durch nämliche Grenzfläche II22 insgesamt hindurchtretenden und weiter zur zweiten Temperaturmeßstelle fließenden Wärmestrom Q2, ein mit der zweiten Temperaturmeßstelle thermisch leitend verbundener - hier ebenfalls vornehmlich durch Wärmeleitung bestimmter -- zweiter Wärmewiderstand R2 (R2 = $\Delta$T2 / Q2) entgegen.

Um eine möglichst gute thermische Ankopplung des Temperaturfühlers 701 an die Wandung des Rohrs bzw. weiter eine möglichst gute thermische Ankopplung des Temperaturfühlers 702 an den Temperaturfühler 701 zu erreichen, ist jeder der Wärmewiderstände R1 und R2 bzw. ist der Temperatursensor 70 gemäß einer weiteren Ausgestaltung der Erfindung so dimensioniert, daß jeder der Wärmewiderstände R1 und R2 jeweils kleiner als 1000 K / W ist. Ferner ist zumindest der Wärmewiderstand R1 bzw. der Temperatursensor 71 auch so dimensioniert, daß der Wärmewiderstand R1 kleiner als 30 K / W, insb. kleiner 25 K / W, ist. Um darüberhinaus zu erreichen, daß der Temperatursensor 70 - wie auch bei dem dem in Fig. 4 gezeigten Ersatzschaltbild zugrundeliegenden (statischen) Berechnungsmodell angenommen - lediglich eine vergleichsweise geringe, mithin vernachlässigbare thermische Trägheit aufweist bzw. jede der beiden Meßstellentemperaturen jeweils rasch allfälligen Änderungen der Rohrtemperatur $\vartheta_{10}$ folgen kann, bzw. daß umgekehrt jede der beiden Meßstellentemperaturen nicht oder allenfalls in nur geringem Maße von einer Änderungsgeschwindigkeit der Rohrtemperatur $\vartheta_{10}$, nämlich einer Geschwindigkeit, mit der die Rohrtemperatur zeitlich ändert, abhängig ist, ist gemäß einer weiteren Ausgestaltung der Erfindung ferner vorgesehen, jeden der Kopplungskörper 711 und 712 jeweils so auszubilden, daß sowohl dem Kopplungskörper 711 als auch dem Kopplungskörper 712 im Ergebnis jeweils eine Wärmekapazität C1 bzw. C2 innewohnt, die kleiner als 2000 J / K; dies in vorteilhafter Weise ferner so, daß die Wärmekapazität C1 des ersten Kopplungskörpers 711 und die Wärmekapazität C2 des zweiten Kopplungskörpers 712 eine Bedingung $\frac{1}{1000} < \frac{C1}{C2} \leq 1$ erfüllt, und/oder daß zumindest der Kopplungskörper 711 eine spezifische Wärmekapazität, die kleiner als 200 J / (kg · K), möglichst aber auch kleiner als 100 J / (kg · K), ist. Aufgrund des für Temperatursensoren der in Rede stehenden Art typischerweise angestrebten kompakten Aufbaus sowie der typischerweise verwendeten, nämlich thermisch gut leitfähigen Materialien besteht zudem auch ein enger Zusammenhang zwischen Wärmewiderstand und Wärmekapazität des Temperatursensor 70, derart, daß die jeweilige Wärmekapazität - mithin auch die vorbezeichnete Wärmekapazität C1 bzw. C2 - umso niedriger ausgebildet ist, je niedriger der jeweilige Wärmewiderstand gewählt ist. Dementsprechend kann durch die Bemessung der Wärmewiderstände R1, R2 der Kopplungskörper 711 bzw. 712 in der vorbezeichneten Weise somit zugleich auch erreicht werden, daß der Temperatursensor 70 insgesamt auch nur eine vergleichsweise geringe thermische Trägheit bezüglich der Rohrtemperatur $\vartheta_{10}$ aufweist bzw. jede der beiden Meßstellentemperaturen - wie angestrebt - jeweils rasch allfälligen Änderungen der Rohrtemperatur $\vartheta_{10}$ folgen kann, bzw. umgekehrt, daß jede der beiden Meßstellentemperaturen nicht oder allenfalls in nur geringem Maße von einer Änderungsgeschwindigkeit der Rohrtemperatur $\vartheta_{10}$, nämlich einer Geschwindigkeit, mit der die Rohrtemperatur $\vartheta_{10}$ zeitlich ändert, abhängig ist.

Der zwischen der Innenfläche 100+ der Wandung des Wandler-Gehäuses 100 und der Mantelfläche 10# der Wandung des Rohrs 10 gebildete Zwischenraum 100' ist ferner - wie bei Wandlervorrichtungen der in Rede stehenden Art durchaus üblich und wie in Fig. 2 bzw. 3 jeweils schematisch mittels punktierter Schraffur angedeutet - mit einem, beispielsweise eine spezifische Wärmeleitfähigkeit λF von weniger als 1 W / (m · K) aufweisenden, Fluid FL2 zwecks Bildung eines das Rohr 10 umhüllenden Fluidvolumen gefüllt. Das im Zwischenraum 100' gehaltene Fluid FL2 bzw. das damit gebildete Fluidvolumen weist eine im weiteren als Rohrumgebungstemperatur $\vartheta_{FL2}$ bezeichnete, ggf. auch zeitlich veränderliche Fluidtemperatur auf, die zumindest zeitweise von der Meßfluid-Temperatur $\vartheta_{FL1}$ um mehr als 1 K (Kelvin), insb. zumindest zeitweise um mehr als 5 K, abweicht. Dementsprechend sind nach einer weiteren Ausgestaltung der Erfindung das Wandler-Gehäuse und das Rohr dafür eingerichtet, nämliches Fluid FL2 im Zwischenraum 100' zu halten, derart, daß die dem Zwischenraum 100' zugewandte Mantelfläche 10+ der Wandung des Rohrs unter Bildung einer zweiten Grenzfläche II12 erster Art von im Zwischenraum vorgehaltenem Fluid FL2 kontaktiert, mithin das Rohr an das im Zwischenraum 100' gebildete Fluidvolumen thermisch gekoppelt ist. Als Fluid FL2 kann beispielsweise Luft oder ein inertes Gas, wie z.B.

Stickstoff oder ein Edelgas, beispielsweise nämlich Helium, dienen. Im Ergebnis dessen sind auch eine dem Zwischenraum 100' zugewandte äußere Oberfläche des Temperatursensors 70 unter Bildung einer dritten Grenzfläche II13 erster Art (Grenzfläche zwischen einer fluiden und einer festen Phase) ist der Temperatursensor 70 an das im Zwischenraum 100' gebildete Fluidvolumen thermisch gekoppelt, derart, daß - wie auch in Fig. 2 bzw. 3 jeweils schematisch dargestellt - einem aus einer zwischen der Grenzfläche II13 erster Art und der ersten Temperaturmeßstelle herrschenden Temperaturdifferenz ΔT3 resultierenden, nämlich von der ersten Temperaturmeßstelle insgesamt zur Grenzfläche II13 fließenden, gleichwohl durch nämliche Grenzfläche II13 insgesamt hindurchtretenden Wärmestrom Q3 ein mit der ersten Temperaturmeßstelle thermisch leitend verbundener- hier nämlich durch Wärmeleitung wie auch an der Grenzfläche II13 auftretende Wärmeströmung (Konvektion) bestimmter - dritter Wärmewiderstand R3 (R3 = ΔT3 / Q3) entgegenwirkt. Der Wärmewiderstand R3 ist in vorteilhafter Weise so bemessen, daß er kleiner als 20000 K / W, insb. kleiner 10000 K / W, ist. Um eine im Vergleich zur thermischen Ankopplung an das Rohr 10 schwächere thermische Ankopplung des Temperatursensors 70 an das im Zwischenraum 100' gebildet Fluidvolumen zu erreichen, nicht zuletzt auch um zu erreichen, daß die damit erfaßten Meßstellentemperaturen $\vartheta_1$ bzw. $\vartheta_2$ möglichst immun gegen - ggf. auch räumlich unterschiedlich ausfallende - schnelle zeitliche Änderungen der Rohrumgebungstemperatur $\vartheta_{FL2}$ ist, bzw. daß der Temperatursensor bezüglich der Rohrumgebungstemperatur $\vartheta_{FL2}$ möglichst eine größere thermische Trägheit als bezüglich der Rohrtemperatur $\vartheta_{10}$ aufweist, ist der Temperatursensor 70 nach einer weiteren Ausgestaltung der Erfindung ferner so ausgebildet, daß der Wärmewiderstand R3 mehr als 500 K / W, insb. mehr als 5000 K / W, beträgt.

Um auch den Wärmewiderstand R3 zum einen auf möglichst einfache Weise vorab bestimmen zu können, zum anderen aber auch nämlichen Wärmewiderstand R3 so auszubilden, daß dessen jeweilige Exemplare innerhalb eines Loses bzw. einer Serie von industriell gefertigten Wandlervorrichtungen der in Rede stehenden Art von Wandlervorrichtung zu Wandlervorrichtung auch eine möglichst geringen Streuung aufweisen, mithin die Wandlervorrichtung insgesamt gut reproduzierbar ist, weist der Temperatursensor 70 gemäß einer weiteren Ausgestaltung der Erfindung - und wie auch in Fig. 2 bzw. 3 jeweils schematisch mit gestrichelter Linie dargestellt - ferner einen dessen Temperaturfühler 702 thermisch mit dem im Zwischenraum gebildeten Fluidvolumen koppelnden dritten Kopplungskörper 713 auf, der nämliches Fluidvolumen unter Bildung der dritten Grenzfläche II13 erster Art kontaktiert. Der Kopplungskörper 713 besteht gemäß weitere Ausgestaltungen der Erfindung zumindest anteilig, insb. nämlich überwiegend oder gänzlich, aus einem Material, von dem eine spezifische Wärmeleitfähigkeit $\lambda 723$ größer als die spezifische Wärmeleitfähigkeit $\lambda F$ des im Zwischenraum gehaltenen Fluids FL2 und/oder größer als 0,1 W / (m · K) ist, und von dem eine spezifische Wärmekapazität cp723 kleiner als eine spezifische Wärmekapazität cpF des im Zwischenraum gehaltenen Fluids FL2 und/oder kleiner als 2000 J / (kg · K), ist. In vorteilhafter Weise ist das Material des Kopplungskörper 713 abgestimmt auf das im Zwischenraum vorgehalten Fluid FL2 so gewählt, daß ein Verhältnis $\lambda 723$ / $\lambda F$ der spezifische Wärmeleitfähigkeit $\lambda 723$ nämlichen Materials zur Wärmeleitfähigkeit $\lambda F$ des im Zwischenraum gehaltenen Fluids FL2 größer als 0,2 ist, und/oder daß ein Verhältnis cp723 / cpF der spezifische Wärmekapazität cp723 nämlichen Materials zur Wärmekapazität cpF des im Zwischenraum gehaltenen Fluids FL2 kleiner als 1,5 ist. Der Kopplungskörper 713 kann - beispielsweise auch gänzlich - mittels eines auf dem zweiten Temperaturfühler 702 des Temperatursensors 70 applizierten, beispielsweise auch mit Metalloxid-Partikeln versetzten, Kunststoffs, wie z.B. einem Epoxidharz oder einem Silikon, gebildet sein. Alternativ oder in Ergänzung kann nämlicher Kopplungskörper 713, ggf. auch gänzlich, mittels eines auf dem Temperaturfühler 702 applizierten Gewebeband, beispielsweise einem Glasfasergewebeband, bzw. auch mittels eines auf dem Temperaturfühler 702 applizierten Metallblech, wie z.B. einem Blechstreifen aus Edelstahl, gebildet sein.

Um zum einen den Temperatursensor 70 mit möglichst geringer thermischer Trägheit bezüglich zeitlicher Änderungen der Rohrtemperatur bereitzustellen, zum anderen auch aber auch eine möglichst gute thermische Ankopplung des Temperatursensors 70 an die Wandung des Rohrs auch bei möglichst kompakter Bauweise zu erreichen ist der erste Kopplungskörper 711 gemäß einer weiteren Ausgestaltung der Erfindung zumindest anteilig - beispielsweise auch überwiegend oder gänzlich - aus einem Material, beispielsweise nämlich einem Wärmeleitkleber hergestellt, von dem eine spezifische Wärmeleitfähigkeit $\lambda 711$ größer als eine spezifische Wärmeleitfähigkeit $\lambda F$ des im Zwischenraum gehaltenen Fluids FL2 und/oder größer als 1 W / (m · K) ist. In vorteilhafter Weise ist das Material des Kopplungskörpers 711 hierbei ferner so gewählt, daß ein Verhältnis $\lambda 711$ / $\lambda F$ der spezifische Wärmeleitfähigkeit $\lambda 711$ nämlichen Materials des Kopplungskörpers 711 zur spezifischen Wärmeleitfähigkeit $\lambda F$ des im Zwischenraum gehaltenen Fluids FL2 größer als 2 ist, und/oder daß ein Verhältnis cp711 / cpF einer spezifische Wärmekapazität cp711 nämlichen Materials des Kopplungskörpers 711 zur Wärmekapazität cpF des im Zwischenraum gehaltenen Fluids FL2 kleiner als 1,5 ist, insb. derart, daß die spezifische Wärmekapazität cp711 kleiner als eine spezifische Wärmekapazität cpF des im Zwischenraum vorgehaltenen Fluids ist.

Aufgrund der thermischen Ankopplung des Temperatursensors 70 an die Wandung des Rohrs einerseits bzw. das dieses um gebende Fluidvolumen andererseits - mit oder ohne Kopplungskörper 713 - wird jede der Meßstellentemperaturen $\vartheta 1$, $\vartheta 2$ jeweils zum einen durch eine zwischen der Rohrtemperatur $\vartheta_{10}$ und der Rohrumgebungstemperatur $\vartheta_{FL2}$ existierende Temperaturdifferenz $\Delta T'$ ($\Delta T' = \vartheta_{10} - \vartheta_{FL2}$) bzw. eine zwischen der Meßfluidtemperatur $\vartheta_{FL1}$ und der Rohrumgebungstemperatur $\vartheta_{FL2}$ existierende Temperaturdifferenz $\Delta T''$ ($\Delta T'' = \vartheta_{FL1} - \vartheta_{FL2}$) und zum anderen aber auch jeweils durch die tatsächlichen Werte der vorbezeichneten Wärmewiderstände R1, R2, und R3 bzw. daraus resultierenden Widerstandsverhältnisse bestimmt. Unter der für das dem in Fig. 4 dargestellten Ersatzschaltbild zugrunde liegenden Berechnungsmodell getroffenen Annahme, daß der durch den Wärmewiderstand R2 hindurchgehende Wärmestrom Q2 dem durch den Wärmewiderstand R1 hindurchgehenden Wärmestrom Q1 und weiter der durch den Wärmewiderstand R3 hindurchgehende Wärmestrom Q3 dem durch den Wärmewiderstand R2 hindurchgehenden Wärmestrom Q2 entspricht, mithin gilt Q3 = Q2 = Q1, kann zunächst abgeleitet werden, daß die Meßstellentemperatur $\vartheta 1$ bzw. die Meßstellentemperatur $\vartheta 2$ näherungsweise bzw. bei im wesentlichen stationärer Temperaturverteilung innerhalb der Wandlervorrichtung u.a. eine der Bedingungen:

$$\vartheta 1 = \left(\vartheta_{FL2} - \vartheta_{10}\right) \cdot \frac{R1}{R1+R3} + \vartheta_{10} \sim -\left(\vartheta_{FL1} - \vartheta_{FL2}\right) \cdot \frac{R1}{R1+R3} + \vartheta_{10} \qquad (1)$$

$$\vartheta 2 = \left(\vartheta_{FL2} - \vartheta_{10}\right) \cdot \frac{R1+R2}{R1+R3} + \vartheta_{10} \sim -\left(\vartheta_{FL1} - \vartheta_{FL2}\right) \cdot \frac{R1+R2}{R1+R3} + \vartheta_{10} \qquad (2)$$

$$\vartheta 1 = \left(\vartheta_{10} - \vartheta_{FL2}\right) \cdot \frac{R3}{R1+R3} + \vartheta_{FL2} \sim \left(\vartheta_{FL1} - \vartheta_{FL2}\right) \cdot \frac{R3}{R1+R3} + \vartheta_{FL2} \qquad (3)$$

$$\vartheta 2 = \left(\vartheta_{10} - \vartheta_{FL2}\right) \cdot \frac{R3 - R2}{R1+R3} + \vartheta_{FL2} \sim \left(\vartheta_{FL1} - \vartheta_{FL2}\right) \cdot \frac{R3 - R2}{R1+R3} + \vartheta_{FL2} \qquad (4)$$

erfüllen, bzw. daß die Meßstellentemperaturen $\vartheta 1$, $\vartheta 2$ gemäß nämlicher Bedingungen von der Rohrumgebungstemperatur $\vartheta_{FL2}$ sowie der Meßfluidtemperatur $\vartheta_{FL1}$ bzw. der Rohrtemperatur $\vartheta_{10}$ abhängig sind. Ferner ergibt sich zudem, daß auch eine einer Differenz der beiden durch die Temperaturmeßsignale θ1, θ2 repräsentierten Meßstellentemperaturen $\vartheta 1$, $\vartheta 2$ entsprechende Meßstellentemperatur-Differenz $\Delta T12 = \vartheta 1 - \vartheta 2$ der vorbezeichneten Temperaturdifferenz $\Delta T'$ zwischen der Rohrtemperatur $\vartheta_{10}$ und der Rohrumgebungstemperatur $\vartheta_{FL2}$ gemäß folgender - in Fig. 5 nochmals grafisch veranschaulichter - Beziehung:

$$\vartheta 1 - \vartheta 2 = \left(\vartheta_{10} - \vartheta_{FL2}\right)\cdot\left(-\frac{R2}{R1+R3}\right) \tag{5}$$

zumindest näherungsweise proportional ist, bzw. daß umgekehrt die Rohrtemperatur $\vartheta_{10}$ gemäß der Beziehung:

$$\vartheta_{10} = \left(1+\frac{R1}{R2}\right)\cdot\vartheta 1 - \frac{R1}{R2}\cdot\vartheta 2 \tag{6}$$

durch die beiden Meßstellentemperaturen $\vartheta 1$, $\vartheta 2$ bestimmbar ist. In Kenntnis der die Wärmewiderstände R1, R2, R3 bzw. des Wärmewiderstandsverhältnisses R1/R2 können somit z.B. die Temperaturdifferenz $\Delta T'$ bzw. auch die Rohrtemperatur $\vartheta_{10}$ unmittelbar anhand der beiden Meßstellentemperaturen $\vartheta 1$, $\vartheta 2$ bzw. deren Meßstellentemperatur-Differenz $\Delta T12$ berechnet werden.

Jeder der vorbezeichneten Wärmewiderstände R1, R2, und R3 ist - wie bereits erwähnt - jeweils maßgeblich bzw. gänzlich durch Materialkennwerte, wie z.B. eine spezifische Wärmeleitfähigkeit $\lambda$, sowie Abmessungen des jeweiligen Kopplungskörpers bzw. der Wandung des Rohrs, wie z.B. eine für den jeweils hindurchfließend Wärmestrom jeweilige effektive Länge $L_{th}$ des jeweiligen Kopplungskörpers sowie einen Flächeninhalt $A_{th}$ einer für nämlichen Wärmestrom jeweilige effektive Querschnittsfläche des jeweiligen Kopplungskörpers, beispielsweise also der Flächeninhalt der Grenzfläche 1121, und/oder durch entsprechende Materialkennwerte der Wandung des Rohrs 10 bzw. des im Zwischenraum 100' vorgehaltenen Fluids FL2, mithin schon allein durch vorab zumindest näherungsweise bekannte, gleichwohl über einen längeren Betriebszeitraum im wesentlichen unveränderliche Parameter definiert. Somit kann jeder der Wärmewiderstände R1, R2, R3, mittels nämlicher Parameter ($\lambda$, $A_{th}$, $L_{th}$) vorab ausreichend genau bestimmt. werden, beispielsweise durch experimentelle Messungen und/oder durch Berechnungen. Beispielsweise kann nämlich basierend auf der bekannten Beziehung:

$$Rth = \frac{\Delta T}{Q} = \frac{L_{eff}}{\lambda \cdot A_{eff}} \tag{7}$$

ein den Wärmewiderstand R1 bzw. R2 mitbestimmender - nämlich einen auf einen Wärmestrom aufgrund von Wärmeleitungsvorgängen bezogenen Temperaturabfall repräsentierender - Wärmeleitwiderstand quantifiziert werden, beispielsweise nämlich für eine Einheit K / W (Kelvin pro Watt) berechnet werden. In Kenntnis der Materialkennwerte der zur Herstellung der Temperatursensoren jeweils tatsächlich verwendeten Materialen sowie der tatsächlichen Form und Abmessung der vorbezeichneten, mittels des Temperatursensors gebildeten Grenzflächen II13, II21 können auch die Widerstandswerte für die vorbezeichneten, die Wärmewiderstande R1, R2, R3 jeweils mitbestimmenden Wärmeübergangswiderstände ausreichend genau festgelegt bzw. ausreichend genau vorab ermittelt werden. Alternativ oder in Ergänzung können die Wärmewiderstände R1, R2, R3 bzw. das entsprechende Wärmewiderstandsverhältnis R1/R2 beispielsweise auch mittels an der jeweiligen Wandlervorrichtung durchgeführten Kalibriermessungen experimentell ermittelt werden.

Unter weiterer Berücksichtigung auch eines durch die Wandung des Rohrs 10 gestellten, eine Temperaturdifferenz $\Delta T10$ zwischen der Grenzfläche II11 (erste Grenzfläche erster Art) und der Grenzfläche II12 (zweite Grenzfläche erster Art) provozierenden weiteren Wärmewiderstands, nämlich - wie auch in Fig. 6 anhand eines im Vergleich zu dem in Fig. 4 entsprechend ergänzten Ersatzschaltbild veranschaulicht - eines dem auch innerhalb der Wandung des Rohrs zwischen der Grenzfläche II11 erster Art und der Grenzfläche II12 erster Art fließenden Wärmestrom Q1 entgegenwirkenden vierten Wärmewiderstands R4 kann zudem auch eine Abhängigkeit der Meßstellentemperatur-Differenz $\Delta T12$ von der zwischen der Meßfluidtemperatur $\vartheta_{FL1}$ und der Rohrumgebungstemperatur $\vartheta_{FL2}$ existierende Temperaturdifferenz $\Delta T''$ ($\Delta T'' = \vartheta_{FL1} - \vartheta_{FL2}$) bzw. umgekehrt auch eine Abhängigkeit der Meßstellentemperatur-Differenz $\Delta T12$ von der zwischen der Meßfluidtemperatur $\vartheta_{FL1}$ und der Rohrumgebungstemperatur $\vartheta_{FL2}$ existierende Temperaturdifferenz $\Delta T''$ ($\Delta T'' = \vartheta_{FL1} - \vartheta_{FL2}$) formuliert bzw. jeweils in Form einer entsprechenden Berechnungsvorschrift ausgeführt werden:

$$\vartheta 1 - \vartheta 2 = \left(\vartheta_{FL1} - \vartheta_{FL2}\right) \cdot \left(-\frac{R2}{R1+R3+R4}\right) \tag{8}$$

bzw.

$$\vartheta_{10} = \left(1 + \frac{R1+R4}{R2}\right) \cdot \vartheta 1 - \frac{R1+R4}{R2} \cdot \vartheta 2 \tag{9}.$$

Auch der vorbezeichnete, durch die Wandung des Rohrs gestellten Wärmeleitwiderstand R4 kann grundsätzlich vorab ausreichend genau quantifiziert, nämlich basierend auf Materialkennwerten des Rohrs, wie etwa dessen spezifischer Wärmeleitfähigkeit $\lambda 10$ bzw. spezifischer Wärmekapazität $cp10$, sowie dessen Abmessungen, insb. dessen Wanddicke s, berechnet werden, beispielsweise gemäß einer der in Abwandlung der vorbezeichneten Beziehung (7) formulierten entsprechend dem in Fig. 6 gezeigten Ersatzschaltbild formulierten Berechnungsvorschriften:

$$R4 = \frac{\Delta T10}{Q1} \approx \frac{L_{eff}}{\lambda 10 \cdot A_{eff}} \tag{10}.$$

Untersuchungen haben hierbei ferner gezeigt, daß bei Ansetzung der Wanddicke s als effektive Länge $L_{eff}$ (s $\rightarrow L_{eff}$) ein dann basierend auf einem Doppelten des Flächeninhalts der zugehörigen Grenzfläche 1121, mithin basierend auf einem Doppelten des Flächeninhalts $A_{th}$ ($2 \cdot A_{th} \rightarrow A_{eff}$) der für den Wärmestrom Q1 effektiven Querschnittsfläche des zugehörigen Kopplungskörpers 711 ermittelter Widerstandswert eine sehr genaue Schätzung für den Wärmeleitungsanteil des für den Wärmestrom Q1 wirksamen Wärmewiderstands R4 ist, mithin insgesamt eine gute Näherung für den jeweiligen Wärmewiderstand R4 ist.

Nachdem grundsätzlich jeder der vorbezeichneten Wärmewiderstände R1, R2, R3, R4 bzw. jedes der daraus abgeleiteten Widerstandsverhältnisse vorab bestimmbar, nämlich quantifizierbar ist, kann anhand der mittels des Temperatursensors 70 erfaßten Meßstellentemperaturen $\vartheta 1$, $\vartheta 2$ bzw. der diese jeweils repräsentierenden Temperaturmeßsignale $\theta 1$, $\theta 2$ dementsprechend auch die Rohrtemperatur $\vartheta_{10}$ - beispielsweise nämlich in Anwendung der Beziehung (6) - und/oder die Meßfluidtemperatur $\vartheta_{FL1}$ - beispielsweise nämlich in Anwendung der Beziehung 9 - berechnet bzw. gemessen werden.

Die Meß- und Betriebs-Elektronik ME daher ist nach einer weiteren Ausgestaltung der Erfindung ferner auch dafür eingerichtet, unter Verwendung sowohl des ersten Temperaturmeßsignals $\theta 1$ als auch des zweiten Temperaturmeßsignals $\theta 2$ wenigstens einen Ziel-Temperatur-Meßwert $X_{\Theta}$, nämlich einen die jeweilige Ziel-Temperatur, beispielsweise nämlich die Rohrtemperatur oder die Meßfluidtemperatur, repräsentierenden Meßwert zu generieren; dies beispielsweise derart, daß die Meß- und Betriebs-Elektronik ME zunächst basierend auf dem Temperaturmeßsignal $\theta 1$ einen die Meßstellentemperatur $\vartheta 1$ repräsentierenden ersten Meßstellentemperatur-Meßwert $X_1$ und basierend auf dem Temperaturmeßsignal $\theta 2$ einen die Meßstellentemperatur $\vartheta 2$ repräsentierenden zweiten Meßstellentemperatur-Meßwert $X_2$ ermittelt und hernach den Ziel-Temperatur-Meßwert $X_{\Theta}$ unter Verwendung sowohl des Meßstellentemperatur-Meßwerts $X_1$ als auch des Meßstellentemperatur-Meßwerts $X_2$ berechnet. Die Berechnung des Ziel-Temperatur-Meßwerts $X_{\Theta}$ kann z.B. in der Weise erfolgen, daß nämlicher Ziel-Temperatur-Meßwert gemäß einer von den Meßstellentemperatur-Meßwerten $X_1$, $X_2$ sowie von vorab ermittelten und in der Meß- und Betriebs-Elektronik ME abgespeicherten numerischen Festwerten $\alpha$, $\beta$ abhängigen Berechnungsvorschrift ermittelt wird bzw. eine entsprechende Bedingung:

$$X_{\Theta} = \alpha \cdot X_{\theta 1} + \beta \cdot X_{\theta 2} \tag{11}$$

erfüllt, mithin eine Temperatur an einem durch die Größe der Festwerte $\alpha$, $\beta$ bzw. ein daraus abgeleitetes Größenverhältnis $\alpha/\beta$ festgelegten Vorrichtungsreferenzpunkt (poi) repräsentiert. Bei Verwendung von lediglich zwei basierend auf den Temperaturmeßsignalen ermittelten Meßstellentemperatur-Meßwerten sind die in vorbezeichneter Bedingung enthaltenen Festwerte $\alpha$, $\beta$ in vorteilhafter Weise so gewählt, daß sie im Ergebnis die Bedingung $\alpha + \beta = 1$ erfüllen. Die Festwerte $\alpha$, $\beta$ können hierbei so definiert sein, daß der dadurch schlußendlich festgelegte Vorrichtungsreferenzpunkt sowohl vom ersten Temperatursensor 71 als auch vom zweiten Temperatursensor 72 entfernt ist, insb. nämlich innerhalb des Rohrs verortet ist; dies beispielsweise auch so, daß die durch den Ziel-Temperatur-Meßwert repräsentierte Ziel-

Temperatur der Meßfluidtemperatur $\vartheta_{FL1}$ oder auch der Rohrtemperatur $\vartheta_{10}$ entspricht. Die Rohrtemperatur $\vartheta_{10}$ ist nicht zuletzt für den vorbeschriebenen Fall, daß die Wandlervorrichtung MW als Meßwandler vom Vibrationstyp ausgebildet ist, von besonderem Interesse, nachdem u.a. ein Elastizitätsmodul des jeweiligen Materials der Wandung des Rohrs wie auch räumliche Abmessungen des Rohrs, mithin die dadurch definierten Schwingungseigenschaften des jeweiligen Rohrs nennenswert auch von der Rohrtemperatur $\vartheta_{10}$ abhängig sind. Beispielsweise kann - nämlich in Anwendung von Gl. (6) - der Vorrichtungsbezugspunkt auf der Grenzfläche II21 zweiter Art, mithin (virtuell) auf bzw. in der Wandung des Rohrs 10 positioniert sein, bzw. kann die Meß- und Betriebs-Elektronik ME entsprechend dafür eingerichtet sein, den Ziel-Temperatur-Meßwert $X_\Theta$ als Meßwert für die Rohrtemperatur $\vartheta_{10}$ zu ermitteln bzw. auszugeben, indem die Festwerte $\alpha$, $\beta$ so gewählt sind, daß dadurch die Bedingung

$$\alpha = 1 + \frac{R1}{R2} \tag{12}$$

sowie die Bedingung:

$$\beta = -\frac{R1}{R2} \tag{13}$$

und/oder die Bedingung:

$$\beta = 1 - \alpha \tag{14}$$

erfüllt sind. Alternativ oder in Ergänzung kann - nämlich in Anwendung von Gl. (9) - der

Vorrichtungsbezugspunkt aber auch auf der Grenzfläche II11 erster Art, mithin (virtuell) innerhalb des Lumens 10' des Rohrs 10 bzw. des darin geführten Fluids FL1 positioniert sein, bzw. kann die die Meß- und Betriebs-Elektronik ME entsprechend dafür eingerichtet sein, den Ziel-Temperatur-Meßwert $X_\Theta$ als Meßwert für die Meßfluidtemperatur $\vartheta_{FL1}$ repräsentieren soll, zu ermitteln bzw. auszugeben. Dies kann unter Berücksichtigung auch des von der Wandung des Rohrs gestellten Wärmewiderstands R4 in einfacher Weise dadurch realisiert sein, indem die Festwerte $\alpha$, $\beta$ so gewählt sind, daß dadurch die Bedingung:

$$\alpha = 1 + \frac{R1 + R4}{R2} \tag{15}$$

sowie die Bedingung:

$$\beta = -\frac{R1 + R4}{R2} \tag{16}$$

erfüllt sind.

Aus der Zusammenschau des in Fig. 4 dargestelltem Ersatzschaltbild und der Beziehung (5) bzw. (6) ergibt sich ferner, daß - um die Rohrtemperatur $\vartheta_{10}$ in Abhängigkeit der

Temperaturdifferenzen $\Delta T1$, $\Delta T2$ bzw. der Meßstellentemperaturen $\vartheta1$, $\vartheta2$ tatsächlich erklären zu können - die Wärmewiderstände R1 und R2 grundsätzlich so zu bemessen sind, daß die dadurch provozierten Temperaturdifferenzen $\Delta T1$, $\Delta T2$ bzw. Meßstellentemperaturen $\vartheta1$, $\vartheta2$ voneinander abweichen, mithin die davon abgeleitete Meßstellentemperatur-Differenz $\Delta T12$ im Ergebnis nennenswert von Null verschieden ist bzw. für die Temperaturdifferenzen $\Delta T1$, $\Delta T2$:

$$\frac{\Delta T1}{\Delta T2} = \frac{\vartheta1 - \vartheta_{10}}{\vartheta2 - \vartheta_{10}} = \frac{R1}{R1 + R3} \cdot \frac{R1 + R3}{R1 + R2} = \frac{1}{1 + \frac{R2}{R1}} \overset{!}{\neq} 1$$

gilt bzw. gelten muß. Dem Rechnung tragend und in Anwendung der vorbezeichneten Bedingungen (1) und (2) sind bei die Wärmewiderstände R1, R2, R3, R4 gemäß einer weiteren Ausgestaltung der Erfindung daher ferner so bemessen, daß sie insgesamt eine Bedingung:

$$\frac{R2}{R1} > 0 \tag{17}$$

erfüllen. Um hierbei auch allfällige Meßungenauigkeiten beider Temperaturfühler des Temperatursensors bzw. durch Fertigungstoleranzen bedingte Meßunsicherheiten bzw. Konfidenzintervalle ausgleichen zu können, etwa, derart, daß das eine ein positives Vorzeichen aufweisende Temperaturdifferenz ΔT' stets durch eine gleichermaßen positive momentane Meßstellentemperatur-Differenz ΔT12 repräsentiert ist, sind die vorbezeichneten Wärmewiderstände R1, R2 nach einer weiteren Ausgestaltung der Erfindung ferner so bemessen, daß im Ergebnis auch die Bedingung:

$$\frac{R2}{R1} > 0{,}1 \tag{18}$$

erfüllt ist. Um ferner auch zu erreichen, daß ein Einfluß der Rohrtemperatur auch auf die Meßstellentemperatur $\vartheta2$ nennenswert ist bzw. daß die Meßstellentemperatur $\vartheta2$ in ähnlichem Maße von der Rohrtemperatur abhängig ist wie die Meßstellentemperatur $\vartheta1$, sind die Wärmewiderstände R1, R2 in vorteilhafter Weise ferner so bemessen, daß sie insgesamt auch eine Bedingung:

$$\frac{R2}{R1} < 200 \tag{19},$$

insb. nämlich auch eine Bedingung:

$$\frac{R2}{R1} < 100 \tag{20}$$

erfüllen.

Um umgekehrt auch sicherstellen zu können, daß ein Einfluß der Rohrumgebungstemperatur sowohl auf die die Meßstellentemperatur $\vartheta1$ als auch die Meßstellentemperatur $\vartheta2$ möglichst gering ist bzw. daß die Meßstellentemperatur $\vartheta2$ in ähnlich geringem Maße von der Rohrumgebungstemperatur abhängig ist wie die Meßstellentemperatur $\vartheta1$, sind die Wärmewiderstände R1, R2 nach einer weiteren Ausgetsaltung der Erfindung der ferner so bemessen, daß sie insgesamt auch eine Bedingung:

$$1 < \frac{R3}{R1 + R2} \tag{21}$$

insb. nämlich auch eine Bedingung:

$$1 < \frac{R3}{R1} \tag{22}$$

erfüllen.

**Patentansprüche**

1. Meßsystem zum Messen wenigstens einer Meßgröße, insb. einer Temperatur, einer Dichte und/oder einer Viskosität, eines strömenden Fluids, insb. eines Gases, einer Flüssigkeit oder einer fließfähigen Dispersion, welches Meßsystem umfaßt:

- eine, insb. mittels eines Mikroprozessors gebildete, Meß- und Betriebs-Elektronik (ME)
- sowie zum Führen des Fluids eine Wandlervorrichtung, umfassend:

-- ein eine von einer, insb. metallischen, Wandung umhüllte Kavität aufweisendes Wandler-Gehäuse (100);

-- ein ein von einer, insb. metallischen, Wandung umhülltes Lumen (10') aufweisendes Rohr (10),

--- das innerhalb der Kavität des Wandler-Gehäuses angeordnet ist, derart, daß zwischen einer der Kavität zugewandte Innenfläche (100+) der Wandung des Wandler-Gehäuses und einer der Kavität zugewandten Mantelfläche (10#) der Wandung des Rohrs ein Zwischenraum (100') gebildet ist,

--- wobei das Rohr (10) dafür eingerichtet ist, in dessen Lumen ein, insb. zumindest zeitweise strömendes, Fluid (FL1), insb. ein Gas, eine Flüssigkeit oder eine fließfähige Dispersion, zu führen, derart, daß eine nämlichem Lumen zugewandte Innenfläche (10+) der Wandung des Rohrs von im Lumen geführtem Fluid unter Bildung einer ersten Grenzfläche (II11) erster Art, nämlich einer Grenzfläche zwischen einer fluiden und einer festen Phase, kontaktiert ist,

--- und wobei das Rohr (10) dafür eingerichtet ist, vom Fluid durchströmt und währenddessen vibrieren gelassen zu werden, insb. derart, daß das Rohr mechanischen Schwingungen um eine diesem zugehörige statische Ruhelage ausführt, die geeignet sind, im strömenden Fluid von einer Massendurchflußrate, m, abhängige Corioliskräfte zu induzieren, und/oder daß das Rohr mechanischen Schwingungen um eine diesem zugehörige statische Ruhelage ausführt, die geeignet sind, im Fluid von einer Viskosität, $\eta$, abhängige Reibungskräfte zu induzieren, und/oder daß das Rohr mechanischen Schwingungen um eine diesem zugehörige statische Ruhelage ausführt, die geeignet sind, im Fluid von einer Dichte, $\rho$, abhängige Trägheitskräfte zu induzieren;

-- einen Schwingungserreger (E) zum Anregen und Aufrechterhalten von mechanischen Schwingungen des wenigstens einen Rohrs um eine zugehörige statische Ruhelage;

-- einen Schwingungssensor (S1) zum Erfassen von mechanischen Schwingungen des wenigstens einen Rohrs;

-- sowie einen mittels eines innerhalb des Zwischenraums (100') angeordneten, insb. mittels eines Platin-Meßwiderstandes, eines Thermistors oder eines Thermoelements gebildeten, ersten Temperaturfühlers (701), mittels eines nämlichen ersten Temperaturfühler (701) thermisch leitend mit der Wandung des Rohrs koppelnden ersten Kopplungskörpers (711), mittels eines vom ersten Temperaturfühler (701) beabstandet innerhalb des Zwischenraums angeordneten, insb. mittels eines Platin-Meßwiderstandes, eines Thermistors oder eines Thermoelements gebildeten, zweiten Temperaturfühlers (702) sowie mittels eines nämlichen zweiten Temperaturfühler (702) thermisch leitend mit dem ersten Temperaturfühler (701) koppelnden zweiten Kopplungskörpers (712) gebildeten Temperatursensor (70),

--- der dafür eingerichtet ist eine erste Meßtemperatur ($\vartheta$1), nämlich eine Temperatur an einer mittels des ersten Temperaturfühlers gebildeten ersten Temperaturmeßstelle, zu erfassen und in eine erstes Temperatursignal ($\theta$1), nämlich ein die erste Meßtemperatur ($\vartheta$1) repräsentierendes erstes elektrisches Meßsignal, insb. mit einer von nämlicher ersten Meßtemperatur abhängigen elektrische Signalspannung und/oder einem von nämlicher ersten Meßtemperatur abhängigen elektrischen Signalstrom, zu wandeln,

--- und der dafür eingerichtet ist, eine zweite Meßtemperatur ($\vartheta$2), nämlich einer Temperatur an einer mittels des zweiten Temperaturfühlers gebildeten zweiten Temperaturmeßstelle, zu erfassen und in ein zweites Temperatursignal, nämlich ein die zweite Meßtemperatur ($\vartheta$2) repräsentierendes zweites elektrisches Meßsignal ($\theta$2), insb. mit einer von nämlicher zweiten Meßtemperatur abhängigen elektrische Signalspannung und/oder einem von nämlicher zweiten Meßtemperatur abhängigen elektrischen Signalstrom zu wandeln;

-- wobei das Wandler-Gehäuse und das Rohr dafür eingerichtet sind, im Zwischenraum (100') ein, insb. eine spezifische Wärmeleitfähigkeit von weniger als 1 W / (m · K) aufweisendes, Fluid (FL2), insb. Luft oder ein inertes Gas, unter Bildung eines das Rohr umhüllenden Fluidvolumens zu halten, derart, daß die dem Zwischenraum zugewandte Mantelfläche (10+) der Wandung des Rohrs (10) unter Bildung einer zweiten Grenzfläche (II12) erster Art von im Zwischenraum (100') gehaltenem Fluid (FL2) kontaktiert ist;

-- wobei der Temperatursensor (70) die Mantelfläche (10#) der Wandung des Rohrs unter Bildung einer ersten Grenzfläche (II21) zweiter Art, nämlich einer Grenzfläche zwischen zwei festen Phasen, und das das Rohr umhüllende Fluidvolumen unter Bildung einer dritten Grenzfläche (II13) erster Art kontaktiert, derart, daß

--- einem aus einer zwischen der ersten Grenzfläche (1121) zweiter Art und der ersten Temperaturmeßstelle herrschenden Temperaturdifferenz, $\Delta T1$, resultierenden, durch nämliche Grenzfläche (II21) insgesamt hindurchtretenden, weiter zur ersten Temperaturmeßstelle fließenden Wärmestrom, Q1, ein erster Wärmewiderstand, R1,

--- einem aus einer zwischen der ersten Temperaturmeßstelle und der zweiten Temperaturmeßstelle herrschenden Temperaturdifferenz, ΔT2, resultierenden, von der ersten zur zweiten Temperaturmeßstelle insgesamt fließenden Wärmestrom, Q2, ein zweiter Wärmewiderstand, R2,

--- und einem aus einer zwischen der zweiten Temperaturmeßstelle und der dritten Grenzfläche (II13) erster Art herrschenden Temperaturdifferenz, ΔT3, resultierenden, von der zweiten Temperaturmeßstelle insgesamt zu nämlicher Grenzfläche (II13) fließenden, gleichwohl durch nämliche Grenzfläche (II13) insgesamt hindurchtretenden Wärmestrom, Q3, ein dritter Wärmewiderstand, R3, entgegenwirken;

-- wobei die Meß- und Betriebs-Elektronik dafür eingerichtet ist, zum Anregen von mechanischen Schwingungen des Rohrs ein den Schwingungserreger (E) treibendes Erregersignal (e) zu generieren,

-- wobei der Schwingungserreger dafür eingerichtet ist, mittels des Erregersignals mechanische Schwingungen des Rohrs anzuregen bzw. aufrecht zu erhalten,

-- wobei der Schwingungssensor (S1) dafür eingerichtet ist, ein Schwingungen des wenigstens einen Rohrs repräsentierendes Schwingungssignal (s1) zu liefern, und

-- wobei die Meß- und Betriebs-Elektronik (ME) dafür eingerichtet ist, unter Verwendung sowohl des ersten Temperaturmeßsignals als auch des zweiten Temperaturmeßsignals sowie des Schwingungssignals einen Dichte-Meßwert, nämlich einen eine Dichte, ρ, des Fluids repräsentierenden Meßwert, zu generieren.

2. Meßsystem gemäß einem der vorherigen Ansprüche,

- wobei der erste Wärmewiderstand, R1, und der zweite Wärmewiderstand, R2, insgesamt eine Bedingung

$$0,1 < \frac{R2}{R1} < 200$$

erfüllen; und/oder
- wobei der erste Wärmewiderstand, R1, der zweite Wärmewiderstand, R2, und der dritte Wärmewiderstand, R3, insgesamt eine Bedingung

$$\frac{R3}{R1+R2} > 1$$

erfüllen; und/oder
- wobei der erste Wärmewiderstand, R1, und der dritte Wärmewiderstand, R3, insgesamt eine Bedingung

$$\frac{R3}{R1} > 1$$

erfüllen; und/oder
- wobei der erste Wärmewiderstand, R1, kleiner als 1000 K / W und der Wärmewiderstand, R2, kleiner als 1000 K / W sind; und/oder
- wobei der dritte Wärmewiderstand, R3, einen mehr als 500 K / W, insb. mehr als 5000 K / W, und/oder weniger als 20000 K / W, insb. 10000 K / W, betragenden Widerstandswert aufweist.

3. Meßsystem gemäß einem der vorherigen Ansprüche, wobei der erste Wärmewiderstand, R1, kleiner als 30 K / W, insb. kleiner als 25 K / W, ist.

4. Meßsystem gemäß einem der vorherigen Ansprüche, wobei der erste Kopplungskörper (711) zumindest anteilig, insb. überwiegend oder gänzlich, aus einem Material, insb. einem Wärmeleitkleber, besteht, von dem eine spezifische Wärmeleitfähigkeit, λ711, größer als eine spezifische Wärmeleitfähigkeit, λF, des im Zwischenraum gehaltenen Fluids (FL2) und/oder größer als 1 W / (m · K) ist, und von dem eine spezifische Wärmekapazität, cp711, kleiner als eine spezifische Wärmekapazität, cpF, des im Zwischenraum vorgehaltenen Fluids und/oder kleiner als 2000 J / (kg · K), ist, insb. derart, daß ein Verhältnis, λ711 / λF, der spezifische Wärmeleitfähigkeit, λ711, nämlichen Materials zur spezifischen Wärmeleitfähigkeit, λF, des im Zwischenraum vorgehaltenen Fluids größer als 2 ist, und/oder daß ein Verhältnis, cp711 / cpF, der spezifische Wärmekapazität, cp711, nämlichen Materials zur spezifischen Wärmekapazität, cpF, des im Zwischenraum gehaltenen Fluids (FL2) kleiner als 0,9 ist.

5. Meßsystem gemäß dem vorherigen Anspruch, wobei der zweite Kopplungskörper (712) zumindest anteilig, insb. überwiegend oder gänzlich, aus einem Material, insb. einem Kunststoff, einer Keramik bzw. einem Metall, besteht, von welchem Material eine spezifische Wärmeleitfähigkeit, $\lambda712$, kleiner als die spezifische Wärmeleitfähigkeit, $\lambda711$, des Materials des ersten Kopplungskörpers (711) und/oder kleiner als 10 W / (m · K) ist, und/oder von welchem Material eine spezifische Wärmekapazität, cp712, kleiner als die spezifische Wärmekapazität, cp711, des Materials des ersten Kopplungskörpers und/oder kleiner 1000 J / (kg · K) ist.

6. Meßsystem gemäß einem der vorherigen Ansprüche, wobei der Temperatursensor mittels des ersten Kopplungskörpers die Mantelfläche (10#) der Wandung des Rohrs unter Bildung der ersten Grenzfläche (II21) zweiter Art, nämlich einer Grenzfläche zwischen zwei festen Phasen, kontaktiert.

7. Meßsystem gemäß einem der vorherigen Ansprüche, wobei der Temperatursensor mittels eines den zweiten Temperaturfühler thermisch mit dem im Zwischenraum gebildeten Fluidvolumen koppelnden dritten Kopplungskörper (713), der nämliches Fluidvolumen unter Bildung der dritten Grenzfläche (II13) erster Art kontaktiert, gebildet ist.

8. Meßsystem gemäß dem vorherigen Anspruch,

- wobei der dritte Kopplungskörper, insb. ausschließlich, mittels eines auf dem zweiten Temperaturfühler applizierten, insb. mit Metalloxid-Partikeln versetzten, Kunststoffs, insb. einem Epoxidharz oder einem Silikon, gebildet ist; und/oder
- wobei der dritte Kopplungskörper, insb. ausschließlich, mittels eines auf dem zweiten Temperaturfühler applizierten Gewebeband, insb. einem Glasfasergewebeband, gebildet ist; und/oder
- wobei der dritte Kopplungskörper, insb. ausschließlich, mittels eines auf dem zweiten Temperaturfühler applizierten Metallblech, insb. aus einem Blechstreifen aus Edelstahl, gebildet ist; und/oder
- wobei der dritte Kopplungskörper zumindest anteilig, insb. überwiegend oder gänzlich, aus einem Material besteht, von dem eine spezifische Wärmeleitfähigkeit, $\lambda713$, größer als eine spezifische Wärmeleitfähigkeit, $\lambda F$, des im Zwischenraum vorgehaltenen Fluids und/oder größer als 1 W / (m · K) ist, und von dem eine spezifische Wärmekapazität, cp713, kleiner als eine spezifische Wärmekapazität, cpF, des im Zwischenraum vorgehaltenen Fluids und/oder kleiner als 2000 J / (kg · K), ist, insb. derart, daß ein Verhältnis, $\lambda713 / \lambda F$, der spezifische Wärmeleitfähigkeit, $\lambda713$, nämlichen Materials zur Wärmeleitfähigkeit, $\lambda F$, des im Zwischenraum vorgehaltenen Fluids größer als 2 ist, und/oder daß ein Verhältnis, cp713 / cpF, der spezifische Wärmekapazität, cp713, nämlichen Materials zur Wärmekapazität, cpF, des im Zwischenraum vorgehaltenen Fluids kleiner als 0,9 ist.

9. Meßsystem gemäß einem der vorherigen Ansprüche,

- wobei dem ersten Kopplungskörper eine Wärmekapazität, C1, innewohnt, die kleiner als 200 J / K, insb. kleiner als 100 J / K, ist, und
- wobei dem zweiten Kopplungskörper eine Wärmekapazität, C2, innewohnt, die kleiner als 200 J / K, insb. kleiner als 100 J / K, ist, insb. derart, daß die Wärmekapazität, C1, des ersten Kopplungskörpers und die zweite Wärmekapazität, C2, des zweiten Kopplungskörpers eine Bedingung $\frac{1}{10} < \frac{C1}{C2} < 1$ erfüllen.

10. Meßsystem gemäß dem vorherigen Anspruch, wobei die Wärmekapazität, C1, des ersten Kopplungskörpers und die zweite Wärmekapazität, C2, des zweiten Kopplungskörpers eine Bedingung $\frac{1}{10} < \frac{C1}{C2} < 1$, insb. eine Bedingung $0,2 < \frac{C1}{C2} < 0,9$, erfüllen.

11. Meßsystem gemäß einem der vorherigen Ansprüche,

- wobei die Wandung des Rohrs eine Wanddicke, s, aufweist, die mehr als 0,5 mm und/oder weniger als 10 mm beträgt; und/oder

- wobei das Rohr einen Innendurchmesser, D, aufweist, der mehr als 0,5 mm und/oder weniger als 200 mm beträgt; und/oder
- wobei das Rohr so bemessen ist, daß es ein Innendurchmesser-zu-Wandstärke-Verhältnis, D / s, definierte als ein Verhältnis eines Innendurchmesser, D, des Rohrs zu einer Wanddicke, s, der Wandung des Rohrs, aufweist, das weniger als 25:1 und/oder mehr als 5:1 beträgt.

12. Meßsystem gemäß einem der vorherigen Ansprüche,

- wobei der Temperatursensor (70), insb. mittels eines Wärmeleitklebers, unter Bildung des ersten Kopplungskörpers stoffschlüssig, insb. adhäsiv, mit der Mantelfläche (10#) der Wandung des Rohrs verbunden ist; und/oder
- wobei der erste Kopplungskörper, insb. ausschließlich, mittels eines zwischen der Wandung des Rohrs und dem ersten Temperaturfühler plazierten, insb. sowohl die Mantelfläche (10#) der Wandung als auch den ersten Temperaturfühler kontaktierenden und/oder mit Metalloxid-Partikeln versetzten, Kunststoffs, insb. einem Epoxidharz oder einem Silikon, gebildet ist.

13. Meßsystem gemäß einem der vorherigen Ansprüche,

- wobei das Rohr zumindest abschnittsweise, insb. überwiegend, gerade, insb. kreiszylindrisch, ist; und/oder wobei das Rohr zumindest abschnittsweise, insb. kreisbogenförmig, gekrümmt ist; und/oder
- wobei die Wandung des Rohrs zumindest anteilig, insb. überwiegend oder gänzlich, aus einem Material, insb. einem Metall oder einer Legierung, besteht, von dem eine spezifische Wärmeleitfähigkeit, $\lambda 10$, größer als 10 W / (m · K), ist und von dem eine spezifische Wärmekapazität, cp1, kleiner als 1000 J / (kg · K) ist; und/oder
- wobei die Wandung des Rohrs aus einem Metall bzw. einer Legierung, insb. Stahl, Titan, Zirkonium, Tantal, besteht.

14. Meßsystem nach einem der vorgerigen Ansprüche, wobei die Meß- und Betriebs-Elektronik (ME) dafür eingerichtet ist, unter Verwendung sowohl des ersten Temperaturmeßsignals ($\theta 1$) als auch des zweiten Temperaturmeßsignals ($\theta 2$) wenigstens einen eine Ziel-Temperatur, nämlich eine Temperatur an einem für das Meßsystem vorgegebenen innerhalb der Wandlervorrichtung festgelegten, insb. sowohl vom ersten Temperatursensor als auch vom zweiten Temperatursensor entfernten und/oder innerhalb des Rohrs lokalisierten, Vorrichtungsreferenzpunkt (poi) reprä-sentierenden Temperatur-Meßwert ($X_\Theta$) zu generieren.

15. Meßsystem nach dem vorherigen Anspruch, wobei der Vorrichtungsbezugspunkt (poi) innerhalb der Wandlervorrichtung, insb. in der Wandung des Rohrs oder im Lumen des Rohrs, lokalisiert ist, insb. derart, daß der Temperatur-Meßwert ($X_\Theta$) eine Rohrtemperatur, nämlich eine von der Wandung des Rohrs angenommene Temperatur, repräsentiert, bzw. derart, daß der Temperatur-Meßwert ($X_\Theta$) eine Meßfluid-Temperatur, nämlich eine Temperatur des innerhalb des Lumens geführten Fluids repräsentiert.

## Claims

1. Measuring system designed to measure at least one measured variable, particularly a temperature, a density and/or a viscosity, of a flowing fluid, particularly of a gas, a liquid or a fluid dispersion, said measuring system comprising:

- measuring and operating electronics (ME), particularly formed by a microprocessor
- as well as a transducer unit designed to conduct the fluid, said unit comprising:

-- a transducer housing (100) having a cavity surrounded by a metallic wall,
-- a tube (10) having a lumen (10') surrounded by a wall, particularly a metallic wall,
--- said tube being arranged inside the cavity of the transducer housing in such a way to form an intermediate space (100') between an interior surface (100+) of the wall of the transducer housing, said surface facing towards the cavity, and a lateral surface (10#) of the wall of the tube, said surface facing towards the cavity,
--- wherein the tube (10) is designed to conduct in the tube's lumen a fluid (FL1), particularly a fluid that flows at least temporarily, particularly a gas, a liquid or a fluid dispersion, in such a way that an interior surface (10+) of the tube wall that faces towards said lumen is in contact with the fluid conducted in the lumen, forming a first interface (II11) of the first type, particularly an interface between a fluid phase and a solid phase,
--- and wherein the tube (10) is designed to have fluid flow through the tube and to vibrate during this flowing of the fluid, particularly in such a way that the tube performs mechanical vibrations around a static rest position pertaining to the tube, said vibrations being suitable for inducing Coriolis forces, which depend on a mass flow rate, m, in the flowing fluid and/or that the tube performs mechanical vibrations around a static rest position pertaining to the tube, said vibrations being suitable for inducing frictional forces in the fluid that depend on a viscosity $\eta$, and/or that the tube performs mechanical vibrations around a static rest position pertaining to the tube, said vibrations being suitable to induce inertial forces in the fluid that depend on a density, p;

-- a vibration exciter (E) designed to excite and maintain mechanical vibrations of the at least one tube around a corresponding static rest position;

-- a vibration sensor (S1) designed to record mechanical vibrations of the at least one tube;

-- as well as a temperature sensor (70) formed by means of a first temperature sensing element (701), which is arranged in the intermediate space (100'), and consisting particularly of a platinum measuring resistor, a thermistor or a thermocouple, by means of a first coupling body (711) coupling said first temperature sensing element (701) in a thermoconductive manner with the wall of the tube, by means of a second temperature sensing element (702) arranged within the intermediate space at a distance from the first temperature sensing element (701), consisting particularly of a platinum measuring resistor, a thermistor or a thermocouple, and by means of a second coupling body (712) coupling said second temperature sensing element (702) in a thermoconductive manner with the first temperature sensing element (701),

--- said temperature sensor being designed to measure a first measurement temperature ($\vartheta 1$), particularly a temperature at a first temperature measuring point formed by means of the first temperature sensing element, and to convert said temperature into a first temperature signal ($\theta 1$), namely a first electrical measuring signal representing the first measurement temperature ($\vartheta 1$), particularly with an electrical signal voltage that depends on said first measurement temperature and/or with an electrical signal current that depends on said first measurement temperature,

--- and said temperature sensor being designed to measure a second measurement temperature ($\vartheta 2$), particularly a temperature at a second temperature measuring point formed by means of the second temperature sensing element, and to convert said temperature into a second temperature signal, namely a second electrical measuring signal ($\theta 2$) representing the second measurement temperature ($\vartheta 2$), particularly with an electrical signal voltage that depends on said second measurement temperature and/or with an electrical signal current that depends on said second measurement temperature,

-- wherein the transducer housing and the tube are designed to hold in the intermediate space (100') a fluid (FL2), particularly air or an inert gas, particularly a fluid having a specific thermal conductivity of less than 1 W (m · K), forming a fluid volume surrounding the tube, such that the lateral surface (10+) of the wall of the tube (10), which faces towards the intermediate space is in contact with the fluid (FL2) retained in the intermediate space (100'), forming a second interface (II12) of the first type,

-- wherein the temperature sensor (70) is in contact with the lateral surface (10#) of the wall of the tube, forming a first interface (1121) of the second type, namely an interface between two solid phases, and with the fluid volume surrounding the tube, forming a third interface (1113) of the first type, such that

--- a first thermal resistance (R1) acts against a heat flow, Q1, resulting from a temperature difference, ΔT1, that exists between the first interface (II21) of the second type and the first temperature measuring point, globally passing said interface (1121) and flowing further to the first temperature measuring point,

--- a second thermal resistance (R2) acts against a heat flow, Q2, resulting from a temperature difference, ΔT2, that exists between the first temperature measuring point and the second temperature measuring point, and flowing from the first temperature measuring point to the second temperature measuring point,

--- a third thermal resistance (R3) acts against a heat flow, Q3, resulting from a temperature difference, ΔT3, that exists between the second temperature measuring point and the third interface (1113) of the first type, and flowing from the second temperature measuring point to said interface (II13) in question, however passing said interface (II13) overall;

-- wherein the measuring and operating electronics are designed to generate an excitation signal (e) that drives the vibration exciter (E) for the excitation of mechanical vibrations of the tube,

-- wherein the vibration exciter is designed to excite or maintain mechanical vibrations of the tube using the excitation signal,

-- wherein the vibration sensor (S1) is designed to provide a vibration signal (s1) representing vibrations of the at least one tube, and

-- wherein the measuring and operating electronics (ME) are designed to generate a density measured value, namely a measured value representing a density, ρ, of the fluid, using both the first temperature measuring signal and the second temperature measuring signal.

2. Measuring system as claimed in one of the previous claims,

   - wherein, overall, the first thermal resistance, R1, and the second thermal resistance, R2, satisfy a condition

$$0.1 < R1/R2 < 200 \; ;$$

   and/or
   - wherein, overall, the first thermal resistance, R1, and the second thermal resistance, R2, and the third thermal resistance, R3, satisfy a condition

$$R3 / (R1+R2) > 1 \; ;$$

   and/or
   - wherein, overall, the first thermal resistance, R1, and the third thermal resistance, R3, satisfy a condition

$$R3/R1 > 1$$

   - wherein the first thermal resistance, R1, is less than 1000 K / W and the second thermal resistance, R2, is less than 1000 K / W; and/or
   - wherein the third thermal resistance, R3, has a resistance value that is greater than 500 K / W, particularly greater than 5000 K / W, and/or less than 20000 K / W, particularly 10000 K / W.

3. Measuring system as claimed in one of the previous claims, wherein the first thermal resistance, R1, is less than 30 K / W, particularly less than 25 K / W.

4. Measuring system as claimed in one of the previous claims, wherein the first coupling body (711) is made, at least partially, particularly primarily or entirely, from a material, particularly a thermally conductive adhesive, a specific thermal conductivity, $\lambda 711$, of which is greater than a specific thermal conductivity, $\lambda F$, of the fluid (FL2) retained in the intermediate space and/or greater than 1 W / (m · K), and wherein a specific thermal capacity, cp711, of which is less than a specific thermal capacity, cpF, of the fluid retained in the intermediate space and/or less than 2000 J / (kg · K), particularly such that a ratio, $\lambda 711 / \lambda F$, between the specific thermal conductivity, $\lambda 711$, of the material in question and the specific thermal conductivity, $\lambda F$, of the fluid retained in the intermediate space is greater than 2, and/or that a ratio, cp711 / cpF, between the specific thermal capacity, cp711, of the material in question and the specific thermal capacity, cpF, of the fluid (FL2) retained in the intermediate space is less than 0.9.

5. Measuring system as claimed in the previous claim, wherein the second coupling body (712) is made, at least partially, particularly primarily or entirely, from a material, particularly a plastic, a ceramic or a metal, wherein a specific thermal conductivity $\lambda 712$ of said material is less than the specific thermal conductivity $\lambda 711$ of the material of the first coupling body (711) and/or is less than 10 W / (m · K), and/or wherein a specific thermal capacity, cp712, of said material is less than the specific thermal capacity, cp711, of the material of the first coupling body and/or less than 1000 J / (kg · K).

6. Measuring system as claimed in one of the previous claims, wherein, by means of the first coupling body, the temperature sensor is in contact with the lateral surface (10#) of the wall of the tube, forming the first interface (1121) of the second type, namely an interface between two solid phases.

7. Measuring system as claimed in one of the previous claims, wherein the temperature sensor is formed by a third coupling body (713), thermally coupling the second temperature sensing element with the fluid volume formed in the intermediate space, which comes into contact with said fluid volume forming the third interface (1113) of the first type.

8. Measuring system as claimed in the previous claim,

   - wherein the third coupling body is made, particularly exclusively, using a plastic which is applied to the second temperature sensor, particularly containing metal oxide particles, particularly an epoxy resin or a silicone; and/or
- wherein the third coupling body is made, particularly exclusively, using a fabric tape, particularly a glass fiber tape, which is applied to the second temperature sensing element; and/or
- wherein the third coupling body is made, particularly exclusively, using a metal plate applied on the second temperature sensing element, particularly a stainless steel metal strip; and/or
- wherein the third coupling body is made, at least partially, particularly primarily or entirely, from a material a specific thermal conductivity, $\lambda713$, of which is greater than a specific thermal conductivity, $\lambda F$, of the fluid retained in the intermediate space and/or is greater than 1 W / (m · K), and wherein a specific thermal capacity, $cp713$, of said material is less than a specific thermal capacity, $cpF$, of the fluid retained in the intermediate space and/or less than 2000 J / (kg · K), particularly such that a ratio, $\lambda713 / \lambda F$, between the specific thermal conductivity, $\lambda713$, of the material in question and the thermal conductivity, $\lambda F$, of the fluid retained in the intermediate space is greater than 2, and/or that a ratio, $cp713 / cpF$, between the specific thermal capacity, $cp713$, of the material in question and the thermal capacity, $cpF$, of the fluid retained in the intermediate space is less than 0.9.

9. Measuring system as claimed in one of the previous claims,

- wherein the first coupling body is **characterized by** a thermal capacity, $C1$, which is less than 200 J / K, particularly less than 100 J / K, and
- wherein the second coupling body is **characterized by** a thermal capacity, $C2$, which is less than 200 J / K, particularly less than 100 J / K, particularly in such a way that the thermal capacity, $C1$, of the first coupling body and the second thermal capacity, $C2$, of the second coupling body satisfy a condition $1/10 < C1/C2 < 1$.

10. Measuring system as claimed in the previous claim, wherein the thermal capacity, $C1$, of the first coupling body and the second thermal capacity, $C2$, of the second coupling body satisfy a condition $1/10 < C1/C2 < 1$, particularly a condition $0.2 < C1/C2 < 0.9$.

11. Measuring system as claimed in one of the previous claims,

- wherein the wall of the tube has a wall thickness, $s$, which is greater than 0.5 mm and/or less than 10 mm; and/or
- wherein the tube has an inner diameter, $D$, which is more than 0.5 mm and/or less than 200 mm; and/or
- wherein the tube is sized in such a way that it has an internal diameter-to-wall thickness ratio, $D / s$, defined as a ratio of an inner diameter, $D$, of the tube to a wall thickness, $s$, of the wall of the tube, which is less than 25:1 and/or is more than 5:1.

12. Measuring system as claimed in one of the previous claims,

- wherein the temperature sensor (70) is connected to the lateral surface (10#) of the wall of the tube by means of a thermally conductive adhesive with substance to substance bonding, particularly adhesively, forming the first coupling body; and/or
- wherein the first coupling body is made, particularly exclusively, from a plastic material, particularly an epoxy resin or a silicone, which is positioned between the tube wall and the first temperature sensing element and, in particular, is in contact with the lateral surface (10#) of the wall and the first temperature sensing element and/or has added metal oxide particles.

13. Measuring system as claimed in one of the previous claims,

- wherein the tube is at least partially, particularly primarily, straight, particularly circular cylindrical and/or wherein the tube is curved, at least in sections, particularly in the form of an arc; and/or
- wherein the wall of the tube consists at least partially, particularly primarily or entirely, of a material, particularly a metal or an alloy, having a specific thermal conductivity, $\lambda10$, greater than 10 W / (m · K) and having a specific thermal capacity, $cp1$, less than 1000 J / (kg · K); and/or
- wherein the wall of the tube is made from a metal or an alloy, particularly steel, titanium, zirconium, tantalum.

14. Measuring system as claimed in one of the previous claims, wherein the measuring and operating electronics (ME) are designed to use both the first temperature measuring signal ($\theta1$) and the second temperature measuring signal ($\theta2$) to generate at least one temperature measured value (Xo) that represents a target temperature, namely a temperature at a unit reference point (poi) predefined for the measuring system and defined within the transducer unit, particularly at a distance from the first temperature sensor and from the second temperature sensor and/or located within the tube.

15. Measuring system as claimed in the previous claim, wherein the unit reference point (poi) is located within the transducer unit, particularly in the wall of the tube or in the lumen of the tube, particularly in such a way that the temperature measured value ($X_\odot$) represents a tube temperature, particularly a temperature adopted by the wall of the tube, or in such a way that the temperature measured value ($X_\odot$) represents a temperature of a fluid under measurement, particularly a temperature of the fluid conducted in the lumen.

**Revendications**

1. Système destiné à la mesure d'au moins une grandeur de mesure, notamment une température, une densité et/ou une viscosité, d'un fluide en écoulement, notamment un gaz, un liquide ou une dispersion fluide, lequel système de mesure comprend :

   - une électronique de mesure et d'exploitation (ME), notamment constituée d'un microprocesseur
   - ainsi que, pour le guidage du fluide, d'un dispositif transducteur, comprenant :

      -- un boîtier de transducteur (100) présentant une cavité entourée d'une paroi, notamment métallique,
      -- un tube (10) présentant un canal (10') entouré d'une paroi, notamment métallique,
      --- lequel tube est disposé à l'intérieur de la cavité du boîtier de transducteur, de telle sorte à former un espace intermédiaire (100') entre une surface intérieure (100+), faisant face à la cavité, de la paroi du boîtier de transducteur et une surface latérale (10#), faisant face à la cavité, de la paroi du tube,
      --- le tube (10) étant conçu afin de guider, dans son canal, un fluide (FL1) notamment s'écoulant au moins temporairement, notamment un gaz, un liquide ou une dispersion fluide, de telle sorte qu'une surface intérieure (10+), faisant face au canal, de la paroi du tube entre en contact avec le fluide guidé dans le canal en formant une première interface (II11) de premier type, notamment une interface entre une phase fluide et une phase solide,
      --- et le tube (10) étant conçu afin d'être parcouru par le fluide et d'entrer en vibration pendant cet écoulement, notamment de telle sorte que le tube exécute des vibrations mécaniques autour d'une position de repos statique correspondant au tube, lesquelles vibrations sont appropriées pour induire des forces de Coriolis dépendant d'un débit massique, m, dans le fluide en écoulement, et/ou de telle sorte que le tube exécute des vibrations mécaniques autour d'une position de repos statique correspondant au tube, lesquelles vibrations sont appropriées pour induire des forces de frottement dépendant d'une viscosité, η, dans le fluide, et/ou de telle sorte que le tube exécute des vibrations mécaniques autour d'une position de repos statique correspondant au tube, lesquelles vibrations sont appropriées pour induire des forces d'inertie dépendant d'une densité, ρ, dans le fluide ;
      -- un excitateur de vibrations (E) destiné à l'excitation et au maintien de vibrations mécaniques de l'au moins un tube autour d'une position de repos statique correspondante ;
      -- un détecteur de vibrations (S1) destiné à la détection des vibrations de l'au moins un tube ;
      -- ainsi qu'une première sonde de température (701) disposée dans un espace intermédiaire (100'), notamment constituée d'une résistance de mesure en platine, d'une thermistance ou d'un thermocouple, un premier corps de couplage (711) couplant la première sonde de température (701) de manière thermoconductrice avec la paroi du tube, une deuxième sonde de température (702) disposée à distance de la première sonde de température (701) dans l'espace intermédiaire, notamment constituée d'une résistance de mesure en platine, d'une thermistance ou d'un thermocouple, ainsi qu'un capteur de température (70) constitué d'un deuxième corps de couplage (712) couplant la deuxième sonde de température (702) de manière thermoconductrice avec la première sonde de température (701),
      --- lequel capteur de température est conçu afin de mesurer une première température (θ1), notamment une température sur un premier point de mesure de température constitué de la première sonde de température, et à convertir en un premier signal de température (θ1), notamment un premier signal de mesure électrique représentant la première température de mesure (θ1), notamment avec une tension de signal électrique dépendant de la première température de mesure et/ou avec un courant de signal électrique dépendant de la première température de mesure,
      --- et lequel capteur de température est conçu afin de mesurer une deuxième température (θ2), notamment une température sur un deuxième point de mesure de température constitué de la deuxième sonde de température, et à convertir en un deuxième signal de température ($\theta$2), notamment un deuxième signal de mesure électrique représentant la deuxième température de mesure ($\theta$2), notamment avec une tension de signal électrique dépendant de la deuxième température de mesure et/ou avec un courant de signal électrique dépendant de la deuxième température de mesure,

-- le boîtier de transducteur et le tube étant conçus afin de retenir un fluide (FL2), notamment de l'air ou un gaz inerte, notamment présentant une conductivité thermique spécifique de moins de 1 W (m · K), en formant un volume de fluide entourant le tube, de telle sorte à être en contact avec la surface latérale (10+), faisant face à l'espace intermédiaire, de la paroi du tube (10) en formant une deuxième interface (1112) de premier type du fluide (FL2) retenu dans l'espace intermédiaire (100'),

-- le capteur de température (70) étant en contact avec la surface latérale (10#) de la paroi du tube en formant une première interface (1121) de deuxième type, notamment une interface entre deux phases solides, ainsi qu'avec le volume de fluide entourant le tube, en formant une troisième interface (II13) de premier type, de telle sorte

--- qu'une première résistance thermique (R1) s'oppose à un flux thermique, Q1, résultant d'une différence de température, $\Delta$T1, régnant entre la première interface (1121) de deuxième type et le premier point de mesure de température, traversant globalement l'interface (1121) en question et s'écoulant plus loin vers le premier point de mesure de température,

--- qu'une deuxième résistance thermique (R2) s'oppose à un flux thermique, Q2, résultant d'une différence de température, $\Delta$T2, régnant entre le premier point de mesure de température et le deuxième point de mesure de température et s'écoulant globalement depuis le premier vers le deuxième point de mesure de température,

--- qu'une troisième résistance thermique (R3) s'oppose à un flux thermique, Q3, résultant d'une différence de température, $\Delta$T3, régnant entre le deuxième point de mesure de température et la troisième interface (II13) de premier type et s'écoulant globalement depuis le deuxième point de mesure de température vers l'interface (II13) en question, néanmoins traversant globalement l'interface (1113) en question,

-- l'électronique de mesure et d'exploitation étant conçue afin de générer, pour l'excitation de vibrations mécaniques du tube, un signal d'excitation (e) attaquant l'excitateur de vibrations (E),

-- l'excitateur de vibrations étant conçu afin d'exciter ou de maintenir au moyen du signal d'excitation les vibrations mécaniques du tube,

-- le capteur de vibrations (S1) étant conçu afin de fournir un signal de vibration (S1) représentant les vibrations de l'au moins un tube, et

-- l'électronique de mesure et d'exploitation (ME) étant conçue afin de générer, en utilisant à la fois le premier signal de température et le deuxième signal de température, ainsi que le signal de vibration, une valeur mesurée de densité, notamment une valeur mesurée représentant une densité, $\rho$, du fluide.

2. Système de mesure selon l'une des revendications précédentes,

- pour lequel la première résistance thermique, R1, et la deuxième résistance thermique, R2, satisfont globalement à une condition

$$0,1 < R1/R2 < 200 \ ;$$

et/ou
- pour lequel la première résistance thermique, R1, et la deuxième résistance thermique, R2, et la troisième résistance thermique, R3, satisfont globalement à une condition

$$R3 \ / \ (R1+R2) > 1 \ ;$$

et/ou
- pour lequel la première résistance thermique, R1, et la troisième résistance thermique, R3, satisfont à une condition

$$R3/R1 > 1$$

- pour lequel la première résistance thermique, R1, est inférieure à 1 000 K / W et la deuxième résistance thermique, R2, est inférieure à 1 000 K / W ; et/ou
- pour lequel la troisième résistance thermique, R3, présente une valeur de résistance supérieure à 500 K / W, notamment supérieure à 5 000 K / W, et/ou inférieure à 20 000 K / W, notamment 10 000 K / W.

3. Système de mesure selon l'une des revendications précédentes, pour lequel la première résistance thermique, R1, est inférieure à 30 K / W, notamment inférieure à 25 K / W.

4. Système de mesure selon l'une des revendications précédentes, pour lequel le premier corps de couplage (711) est constitué au moins partiellement, notamment essentiellement ou intégralement, d'un matériau, notamment une colle thermoconductrice, pour lequel une conductivité thermique spécifique, $\lambda711$, est supérieure à une conductivité thermique spécifique, $\lambda F$, du fluide (FL2) retenu dans l'espace intermédiaire et/ou supérieure à 1 W / (m · K), et pour lequel une capacité thermique spécifique, cp711, est inférieure à une capacité thermique spécifique, cpF, du fluide retenu dans l'espace intermédiaire et/ou inférieure à 2 000 J / (kg · K), notamment de telle sorte qu'un rapport, $\lambda711 / \lambda F$, entre la conductivité thermique spécifique, $\lambda711$, du matériau en question et la conductivité thermique spécifique, $\lambda F$, du fluide retenu dans l'espace intermédiaire est supérieur à 2, et/ou qu'un rapport, cp711 / cpF, entre la capacité thermique spécifique, cp711, du matériau en question et la capacité thermique spécifique, cpF, du fluide (FL2) retenu dans l'espace intermédiaire est inférieur à 0,9.

5. Système de mesure selon l'une des revendications précédentes, pour lequel le deuxième corps de couplage (712) est constitué au moins partiellement, notamment essentiellement ou intégralement, d'un matériau, notamment une matière plastique, une céramique ou un métal, matériau pour lequel une conductivité thermique spécifique, $\lambda712$, est inférieure à la conductivité thermique spécifique, $\lambda711$, du matériau du premier corps de couplage (711) et/ou inférieure à 10 W / (m · K), et/ou matériau pour lequel une capacité thermique spécifique, cp712, est inférieure à la capacité thermique spécifique, cp711, du matériau du premier corps de couplage et/ou inférieure à 1 000 J / (kg · K).

6. Système de mesure selon l'une des revendications précédentes, pour lequel le capteur de température est en contact au moyen du premier corps de couplage avec la surface latérale (10#) de la paroi du tube en formant la première interface (II21) de deuxième type, notamment une interface entre deux phases solides.

7. Système de mesure selon l'une des revendications précédentes, pour lequel le capteur de température est formé d'un troisième corps de couplage (713) couplant thermiquement la deuxième sonde de température avec le volume de fluide formé dans l'espace intermédiaire, qui entre en contact avec ce même volume de fluide en formant la troisième interface (II13) de premier type.

8. Système de mesure selon la revendication précédente,

- pour lequel le troisième corps de couplage est constitué d'une matière plastique, notamment une résine époxy ou un silicone, appliquée, notamment exclusivement, sur la deuxième sonde de température, notamment marquée avec des particules d'oxyde métallique ; et/ou
- pour lequel le troisième corps de couplage est constitué d'une bande de tissu, notamment une bande de tissu de verre, appliquée, notamment exclusivement, sur la deuxième sonde de température ; et/ou
- pour lequel le troisième corps de couplage est constitué d'une tôle métallique, notamment une bande de tôle en acier inoxydable, appliquée, notamment exclusivement, sur la deuxième sonde de température ; et/ou
- pour lequel le troisième corps de couplage est constitué au moins partiellement, notamment essentiellement ou intégralement, d'un matériau, pour lequel une conductivité thermique spécifique, $\lambda713$, est supérieure à une conductivité thermique spécifique, $\lambda F$, du fluide retenu dans l'espace intermédiaire et/ou supérieure à 1 W / (m · K), et pour lequel une capacité thermique spécifique, cp713, est inférieure à une capacité thermique spécifique, cpF, du fluide retenu dans l'espace intermédiaire et/ou inférieure à 2 000 J / (kg · K), notamment de telle sorte qu'un rapport $\lambda713 / \lambda F$, entre la conductivité thermique spécifique, $\lambda713$, du matériau en question et la conductivité thermique spécifique, $\lambda F$, du fluide retenu dans l'espace intermédiaire est supérieur à 2, et/ou qu'un rapport, cp713 / cpF, entre la capacité thermique spécifique, cp713, du matériau en question et la capacité thermique spécifique, cpF, du fluide retenu dans l'espace intermédiaire est inférieur à 0,9.

9. Système de mesure selon l'une des revendications précédentes,

- pour lequel une capacité thermique, C1, caractérise le premier corps de couplage, laquelle capacité est inférieure à 200 J / K, notamment inférieure à 100 J / K, et

- pour lequel une capacité thermique, C2, caractérise le deuxième corps de couplage, laquelle capacité est inférieure à 200 J / K, notamment inférieure à 100 J / K, notamment de telle sorte que la capacité thermique, C1, du premier corps de couplage et la deuxième capacité thermique, C2, du deuxième corps de couplage satisfont à une condition 1/10 < C1/C2 < 1.

10. Système de mesure selon la revendication précédente, pour lequel la capacité thermique, C1, du premier corps de couplage et la deuxième capacité thermique, C2, du deuxième corps de couplage satisfont à une condition 1/10 < C1/C2 <1, notamment une condition 0,2 <C1/C2 < 0,9.

11. Système de mesure selon l'une des revendications précédentes,

- pour lequel la paroi du tube présente une épaisseur, s, supérieure à 0,5 mm et/ou inférieure à 10 mm ; et/ou
- pour lequel le tube présente un diamètre intérieur, D, supérieur à 0,5 mm et/ou inférieur à 200 mm ; et/ou
- pour lequel le tube est dimensionné de telle sorte qu'il présente un rapport diamètre intérieur-épaisseur de paroi, D / s, défini en tant que rapport entre un diamètre intérieur, D, du tube et une épaisseur, s, de la paroi du tube, qui est inférieur à 25:1 et/ou supérieur à 5:1.

12. Système de mesure selon l'une des revendications précédentes,

- pour lequel le capteur de température (70) est relié, au moyen d'une colle thermoconductrice, par liaison de matière, notamment adhésive, en formant le premier corps de coupleur, avec la surface latérale (10#) de la paroi du tube ; et/ou
- pour lequel le premier corps de coupleur est constitué, notamment exclusivement, d'une matière plastique, notamment une résine époxy ou un silicone, placée entre la paroi du tube et la première sonde de température, en contact notamment à la fois avec la surface latérale (10#) de la paroi et la première sonde de température, et/ou marquée avec des particules d'oxyde métallique.

13. Système de mesure selon l'une des revendications précédentes,

- pour lequel le tube est au moins partiellement, notamment essentiellement, droit, notamment cylindrique circulaire ; et/ou pour lequel le tube est coudé partiellement, notamment en forme d'arc de cercle ; et/ou
- pour lequel la paroi du tube est constituée au moins partiellement, notamment essentiellement ou intégralement, d'un matériau, notamment un métal ou un alliage, matériau pour lequel une conductivité thermique spécifique, $\lambda 10$, est supérieure à 10 W / (m · K) et pour lequel une capacité thermique spécifique, cp1, est inférieure à 1 000 J / (kg · K) ; et/ou
- pour lequel la paroi du tube est constituée d'un métal ou d'un alliage, notamment de l'acier, du titane, du zirconium, du tantale.

14. Système de mesure selon l'une des revendications précédentes, pour lequel l'électronique de mesure et d'exploitation (ME) est conçue afin de générer, en utilisant à la fois le premier signal de mesure de température ($\theta 1$) et le deuxième signal de mesure de température ($\theta 2$), au moins une valeur mesurée de température (Xo) représentant une température cible, notamment une température sur un point de référence de dispositif (poi) prédéfini pour le système de mesure et défini à l'intérieur du dispositif transducteur, notamment distant à la fois du premier capteur de température et du deuxième capteur de température et/ou localisé à l'intérieur du tube.

15. Système de mesure selon la revendication précédente, pour lequel le point de référence de dispositif (poi) est localisé à l'intérieur du dispositif transducteur, notamment dans la paroi du tube ou dans le canal du tube, notamment de telle sorte que la valeur mesurée de température (Xo) représente une température du tube, notamment une température adoptée par la paroi du tube, ou de telle sorte que la valeur mesurée de température (Xo) représente une température du fluide de mesure, notamment une température du fluide guidé à l'intérieur du canal.

Fig. 1

**Fig. 2**

**Fig. 3**

EP 3 117 194 B1

*Fig. 4*

*Fig. 5*

*Fig. 6*

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 919793 A
- US 20040187599 A
- US 20080127745 A
- US 20110113896 A
- US 4768384 A
- US 5602346 A
- US 6047457 A
- US 7040179 B
- US 7549319 B
- WO 0102816 A
- WO 2009051588 A
- WO 2009134268 A
- WO 2012018323 A
- WO 2012033504 A
- WO 2012067608 A
- WO 2012115639 A
- EP 2151673 A2
- US 20010037690 A
- US 20110265580 A
- US 20110146416 A
- US 20100242623 A
- WO 2013092104 A
- WO 0129519 A
- WO 9802725 A
- WO 9421999 A
- WO 8802853 A
- US 7200503 B
- US 7792646 B
- WO 9607081 A
- US 6311136 B